# EUROPÄISCHE PATENTSCHRIFT

(11) **EP 3 937 592 B1**
(45) Veröffentlichungstag und Bekanntmachung des Hinweises auf die Patenterteilung: **02.10.2024**
(21) Anmeldenummer: 21183825.5
(22) Anmeldetag: 05.07.2021
(51) Int. Cl.: H05B 3/10, H05B 3/14, H05B 3/42, B29C 65/14

(54) **INFRAROTSTRAHLUNGS-EMITTER, SCHWEISSANLAGE, INSBESONDERE KUNSTSTOFFSCHWEISSANLAGE, MIT EINEM SOLCHEN INFRAROTSTRAHLUNGS-EMITTER, SOWIE SCHWEISSVERFAHREN MIT EINEM SOLCHEN INFRAROTSTRAHLUNGS-EMITTER**
INFRARED RADIATION EMITTER, WELDING SYSTEM, IN PARTICULAR PLASTIC WELDING SYSTEM, COMPRISING SUCH AN INFRARED RADIATION EMITTER, AND WELDING METHOD WITH SUCH AN INFRARED RADIATION EMITTER
ÉMETTEUR DE RAYONNEMENT INFRAROUGE, INSTALLATION DE SOUDAGE, EN PARTICULIER INSTALLATION DE SOUDAGE DE MATIÈRE PLASTIQUE, DOTÉ D'UN TEL ÉMETTEUR DE RAYONNEMENT INFRAROUGE, AINSI QUE PROCÉDÉ DE SOUDAGE À L'AIDE D'UN TEL ÉMETTEUR DE RAYONNEMENT INFRAROUGE

(30) Priorität: 08.07.2020 DE 102020117987
(43) Veröffentlichungstag der Anmeldung: 12.01.2022
(73) Patentinhaber: PolyMerge GmbH, 82538 Geretsried (DE)
(72) Erfinder: Sieben, Manuel, 90768 Fürth (DE)
(74) Vertreter: Engstle, Verena

(56) Entgegenhaltungen:
- WO-A1-2017/089494
- CN-A- 110 536 491
- DE-A1- 102011 055 460
- DE-T2- 3 587 589
- DE-T2- 60 110 536
- JP-A- H04 174 990
- US-A- 2 941 962
- US-A1- 2007 295 708
- US-A1- 2009 179 023

## Beschreibung

Die vorliegende Erfindung betrifft einen Infrarotstrahlungs-Emitter, eine Schweißanlage, insbesondere eine Kunststoffschweißanlage, mit einem solchen Infrarotstrahlungs-Emitter sowie ein Schweißverfahren, insbesondere ein Kunststoffschweißverfahren mit einem solchen Infrarotstrahlungs-Emitter.

Beim konventionellen Schweißen von thermoplastischen Kunststoffen wird üblicherweise die Fügezone durch ein Heizelement aufgeschmolzen. Hierbei werden die beiden Fügepartner jeweils mit einer Seite des Heizelementes in Kontakt gebracht. Nachdem ausreichend Material in die schmelzflüssige Phase übergegangen ist, findet das so genannte Umstellen statt. Dabei werden die beiden Bauteilhalbschalen vom Heizelement abgehoben, das Heizelement selbst wird zurückgefahren und die beiden (noch) schmelzflüssigen Thermoplasten werden in Kontakt gebracht.

Eine Weiterentwicklung dieses Verfahrens stellt das kontaktlose Heizelementschweißen sowie das darauf aufbauende Infrarotschweißen dar. Speziell beim Infrarotschweißen finden zwei unterschiedliche Konzepte Anwendung: das Schweißen mittels Metallfolienemittern sowie mittels Quarzglasstrahlern. Bei Metallfolienemittern handelt es sich um eine Metallfolie bzw. ein Widerstandsblech aus entsprechenden Legierungen wie beispielsweise Konstantan. Die maximale Betriebstemperatur liegt bei 800°C, wodurch sich ein Emissionsmaximum bei einer Wellenlänge von ca. 3µm ergibt. Höhere Temperaturen müssen ausgeschlossen werden, da es zu starken Oxidationseffekten mit der umgebenden Luft käme. Zum Aufbau einer Schweißvorrichtung wird ein Träger mit einer Nut versehen. Eine Metallfolie wird Zig-Zag in diese Nut gelegt und fixiert.

Dem gegenüber stehen Schweißvorrichtungen mit Quarzglasemittern. Bei diesen wird analog zu einer Glühbirne der Glaskörper evakuiert und eine Wolfram-Glühwendel eingezogen. Aufgrund des Luftvakuums können Oxidationsprozesse weitestgehend unterbunden werden und hierdurch höhere Energien eingesetzt werden. Hierdurch erhöht sich gegenüber den Metallfolienemittern zwar deutlich die Strahlungsleistung, aber aufgrund des Quarzglaskörpers wird ein Teil des Lichtes absorbiert und trägt so nicht mehr zum Schweißprozess bei. Ein weiterer Nachteil dieser verbreiteten Technologie ist die eingeschränkte Gestaltungsfreiheit. Zwar können die Glasrohre manuell gebogen werden, die Radien sind jedoch begrenzt und auch die Fertigungstoleranzen sind sehr kritisch.

Die Druckschrift WO 2014/160156 A1 beschreibt ein keramisches Heizelement für das Kunststoffschweißen, welches ein Siliziumkarbidmaterial umfasst. Das in dieser Druckschrift beschriebene Heizelement wird mittels eines chemischen Verbrennungsprozesses betrieben.

Die Druckschrift JPH04174990A offenbart ein elektrisch betriebenes, keramisches Heizelement aus Siliziumkarbid, welches Strahlung im infraroten Bereich abgibt.

Die Druckschrift WO 2017/089494 A1 beschreibt ein elektrisches Heizelement aus Siliziumkarbid, dass mittels eines 3-D-Druckverfahrens hergestellt werden kann.

Die Druckschrift US 2,941,962 offenbart Widerstands-Heizelemente aus Siliziumkarbid, wobei Siliziumkarbid-Material schwarze und grüne Siliziumkarbidkristalle umfassen kann, was zu einer Verringerung des elektrischen Widerstands des Widerstands-Heizelements führt.

Die Druckschriften JPH04174990A und WO 2017/089494 A1 offenbaren jedoch nicht, dass die darin beschriebenen keramischen Heizelemente für Anwendungen im Schweißbereich geeignet sein könnten.

Die Druckschrift US 2009/0179023 A1 offenbart ein keramisches Widerstandsheizelement und ein Verfahren zur Herstellung eines keramischen Widerstandsheizelements, wobei der Heizelementkörper zwei oder mehr Bereiche mit unterschiedlichem spezifischen Widerstand aufweist, und wobei die Heizelemente eine offene Fläche haben.

Die Druckschrift US 2007/0295708 A1 offenbart ein keramisches Widerstandsheizelement mit einer als Wärmesenke dienenden elektrisch isolierenden Zone und einer resistiven Heizzone, das mittels Spritzguss gefertigt werden kann.

Die Druckschrift DE 35 87 589 T2 offenbart ein Verfahren zum Schweißen aus Rohrleitungen aus Kunststoff mit kontinuierlichen Betriebstemperaturen im Bereich von 300°F bis 500°F mit einem Infrarot-Heizgerät mit glühenden Flächen.

Es ist eine Aufgabe der Erfindung einen Infrarotstrahlungs-Emitter bereitzustellen, der für Schweißanwendungen, insbesondere für das Kunststoffschweißen, Vorteile gegenüber bekannten Emittern bietet.

Diese Aufgabe wird durch einen Infrarotstrahlungs-Emitter mit den Merkmalen des Patentanspruchs 1 gelöst.

Es ist ferner eine Aufgabe der Erfindung eine vorteilhafte Schweißanlage, insbesondere eine vorteilhafte Kunststoffschweißanlage bereitzustellen.

Diese Aufgabe wird durch einen Infrarotstrahlungs-Emitter mit den Merkmalen des Patentanspruchs 12 gelöst.

Darüber hinaus ist es Aufgabe der Erfindung ein vorteilhaftes Schweißverfahren, insbesondere Kunststoffschweißverfahren, zur Verfügung zu stellen.

Diese Aufgabe wird durch eine Schweißanlage mit den Merkmalen des Patentanspruchs 13 gelöst.

Die Aufgabe wird gemäß der Erfindung gelöst durch einen, beispielsweise in einem 3-D-Druckverfahren hergestellten, Infrarotstrahlungs-Emitter mit einem Emitterkörper, der ein keramisches Material umfasst, wobei der Emitterkörper einen Arbeitsbereich aufweist, der bei Anlegen eines elektrischen Stromes inkohärente Infrarotstrahlung abgibt, wobei das keramische Material eine erste Materialkomponente umfasst, die eine mit zunehmender Temperatur zunehmende elektrische Leitfähigkeit aufweist und wobei das keramische Material eine zweite Materialkomponente aufweist, die die elektrische Leitfähigkeit des keramischen Materials in einem unteren Temperaturbereich erhöht.

Indem der erfindungsgemäße Infrarotstrahlungs-Emitter eine erste Materialkomponente eines keramischen Materials aufweist, das eine mit zunehmender Temperatur zunehmende elektrische Leitfähigkeit aufweist, kann der Emitter durch Anlegen eines elektrischen Stroms dazu angeregt werden, inkohärente Infrarotstrahlung abzugeben, wobei der von dem Emitter abgestrahlte Wärmestrom mit der Temperatur des Emitterkörpers steigt. Auf diese Weise ist es möglich einen schnellen Anstieg der Temperatur und damit des abgestrahlten Wärmestroms zu realisieren. Um den Anstieg der Temperatur weiter zu beschleunigen, wird eine zweite Materialkomponente hinzugefügt, welche die in einem unteren Temperaturbereich, sprich in kaltem Zustand oder bei Raumtemperatur, verhältnismäßig niedrige elektrische Leitfähigkeit des keramischen Materials erhöht. Auf diese Weise ist ein Infrarotstrahlungs-Emitter geschaffen, der sehr schnell eine Betriebstemperatur von bis zu 1700° Celsius erreichen kann. Zudem ist ein derartiger Emitter nicht anfällig gegenüber Korrosion und kann in einfacher Weise hergestellt werden. Durch die Erhöhung der elektrischen Leitfähigkeit in einem unteren oder niedrigen Temperaturbereich ist es möglich, auf ein Vorheizen des Emitters zu verzichten und diesen bereits bei Raumtemperatur durch Stromfluss zu erhitzen. Als ein unterer Temperaturbereich soll dabei ein Temperaturbereich verstanden werden, in dem die elektrische Leitfähigkeit des keramischen Materials geringer ist als in einem höheren Temperaturbereich. Insbesondere kann der untere Temperaturbereich als Bereich zwischen Raumtemperatur bis ca. 700°C verstanden werden. Zugleich ermöglicht die ausgewählte Materialkombination die Herstellung des Infrarotstrahlungs-Emitters in einem 3-D-Druckverfahren, so dass der Emitter variabel hinsichtlich seiner geometrischen Struktur hergestellt werden kann und so vorteilhaft auf die jeweilige Schweißaufgabe angepasst werden kann.

Gemäß der Erfindung ist zumindest der Arbeitsbereich, vorzugsweise der gesamte Emitterkörper, im Wesentlichen formstabil und selbsttragend.

Auf diese Weise benötigt der Emitterkörper kein stützendes Gehäuse oder eine Rahmenstruktur um in Form gehalten zu werden, wie dies bei Metallfolien oder Quarzglasemittern der Fall ist. Dadurch, dass keine Stütz- oder Rahmenelemente zur Halterung des Emitterkörpers notwendig sind, entfällt auch die Notwendigkeit von dem Emitterkörper auf die Stütz- oder Rahmenelemente übertragene Wärme von diesen wegzuleiten. Auf diese Weise können Kühlmaßnahmen reduziert oder vermieden werden. Darüber hinaus ist es möglich, den Emitterkörper mittels dafür vorgesehener Maschinenelemente, beispielsweise Vorschub- oder Handhabungselementen in eine Arbeitsposition und aus der Arbeitsposition wieder heraus zu bewegen, ohne durch das Bewegungsmoment eine ungewollte Formänderung des Emitterkörpers hervorzurufen.

Gemäß der Erfindung ist ferner definiert, dass zumindest der Arbeitsbereich, vorzugsweise der gesamte Emitterkörper, als langgestreckter Körper ausgebildet ist, wobei die Längserstreckung des Arbeitsbereiches, vorzugsweise des Emitterkörpers, ein Mehrfaches oder Vielfaches, besonders bevorzugt ein mehr als zehnfaches oder mehr als fünfzigfaches, einer Breite und einer Höhe eines quer zur Längserstreckung liegenden oder angeordneten Emitterkörperquerschnitts umfasst.

Auf diese Weise kann der Emitterkörper entsprechend eines zu erwärmenden oder zu schweißenden Bereichs einer Oberfläche eines Werkstücks ausgebildet werden und definiert durch seine langgestreckte Form die Länge wenigstens eines Bereichs der Schweißnaht oder die gesamte Längserstreckung der Schweißnaht. Es ist insbesondere vorteilhaft, wenn die Längserstreckung des Emitterkörpers ein Mehrfaches oder Vielfaches einer Breite und einer Höhe eines quer zur Längserstreckung liegenden oder angeordneten Emitterkörperquerschnitts umfasst.

Ferner ist es vorteilhaft, wenn der Arbeitsbereich so ausgebildet ist, dass beim Betrieb des Infrarotstrahlungs-Emitters Infrarotstrahlung in wenigstens zwei entgegengesetzte Richtungen, insbesondere zusätzlich in wenigstens eine dritte Richtung, vorzugsweise im Wesentlichen in genau vier Richtungen, abstrahlbar ist oder abgestrahlt wird und/oder wobei der Arbeitsbereich so ausgebildet ist, dass in einem Betrieb des Infrarotstrahlungs-Emitters Infrarotstrahlung radial von dem Arbeitsbereich abstrahlbar ist oder abgestrahlt wird.

Auf diese Weise können bei einem Kunststoffschweißprozess bei dem der Arbeitsbereich zwischen zwei zu fügenden Kunststoffteilen angeordnet ist, die Fügezonen beider Teile gleichzeitig durch die abgestrahlte Infrarotstrahlung erwärmt werden. Anschließend wird der Arbeitsbereich aus dem Bereich zwischen den Teilen herausgefahren und die Kunststoffteile miteinander in Kontakt gebracht. Dadurch kann das Kunststoffschweißverfahren vorteilhaft beschleunigt werden. Ebenfalls möglich ist es, jedem der zu fügenden Kunststoffteile oder jeder der erwärmenden Fügezonen einen eigenen Arbeitsbereich zur Erwärmung zuzuordnen. Wird zur Erwärmung jedes der zu fügenden Kunststoffteile oder Fügezonen ein separater Arbeitsbereich eingesetzt, so können die wenigstens zwei Arbeitsbereiche in einem Infrarotstrahlungs-Emitter integriert sein oder es können zwei oder mehrere Infrarotstrahlungs-Emitter mit jeweils einem Arbeitsbereich eingesetzt werden. Besonders vorteilhaft kann der Arbeitsbereich in seiner Form auf die Form und Führung der Schweißnaht angepasst werden. Wenn beispielsweise ein Fügepartner eine Vertiefung aufweist, innerhalb derer die Schweißnaht ausgebildet werden soll, kann eine radiale Abstrahlung von einem Arbeitsbereich mit einem entsprechenden Querschnitt den Schweißbereich in günstiger Weise erwärmen.

In einer weiteren vorteilhaften Ausführungsform weist der Arbeitsbereich ebene Flächen auf, von denen in einem Betrieb des Infrarotstrahlungs-Emitters Infrarotstrahlung orthogonal abstrahlbar ist oder abgestrahlt wird.

Ein Arbeitsbereich mit ebenen Flächen, beispielsweise bei einem Arbeitsbereich mit viereckigem Querschnitt, kann in einer Schweißanwendung mit einem größeren abstrahlenden Flächenanteil nahe an der aufzuschmelzenden Oberfläche angeordnet werden als ein Arbeitsbereich mit gebogener Fläche, beispielsweise bei einem Arbeitsbereich mit rundem Querschnitt.

Des Weiteren ist in einer vorteilhaften Ausführungsform der Arbeitsbereich so ausgebildet, dass die abgestrahlte Infrarotstrahlung im Wesentlichen innerhalb eines Winkelbereichs von 180° oder innerhalb eines Winkelbereichs von 120° oder innerhalb eines Winkelbereichs von weniger als 120° abgestrahlt wird.

Auf diese Weise können verschiedene Emitterkörper bereitgestellt werden, die jeweils an eine spezifische Positionierung der Fügepartner innerhalb einer Schweißanlage angepasst sind. Wird Infrarotstrahlung im Wesentlichen innerhalb eines Winkelbereichs von 180°, also innerhalb eines Winkels zwischen 0° und 180°, das heißt insbesondere in entgegengesetzte Richtungen abgestrahlt, so können parallel zueinander angeordnete Fügeflächen der Fügepartner gleichzeitig und mit gleicher Strahlungsleistung erwärmt werden. Eine Abstrahlung innerhalb eines Winkelbereichs von weniger als 180° ist demgegenüber besonders geeignet, wenn Fügeflächen vor dem Fügen nicht parallel zueinander angeordnet sind oder angeordnet werden können.

Ferner kann es vorteilhaft sein, wenn der Arbeitsbereich stabförmig oder rohrförmig ausgebildet ist und/oder einen runden, insbesondere kreisförmigen oder nicht kreisförmigen, oder rohrförmigen oder Omega-förmigen Querschnitt und/oder ein U-förmiges oder V-förmiges oder W-förmiges oder C-förmiges Profil aufweist. Ebenfalls vorteilhaft kann ein polygonaler, insbesondere ein im Wesentlichen dreieckiger oder viereckiger, Querschnitt sein, insbesondere wenn der Querschnitt eine Breite und eine Stärke aufweist.

Ein stabförmiger Arbeitsbereich ermöglicht eine sehr einfache Herstellung des Emitters. Ein rohrförmiger Arbeitsbereich erlaubt beispielsweise das Vorsehen von Kühlmaßnahmen im Innern des Arbeitsbereichs, die beispielsweise einer Temperaturregelung bei hohen Temperaturen zu Gute kommen könnten. Ferner kann der Querschnitt des Arbeitsbereichs an die Schweißaufgabe angepasst sein. Insbesondere ist es möglich, dass der Arbeitsbereich wenigstens zwei oder mehrere unterschiedliche Querschnitte aufweist oder dass der Querschnitt des Arbeitsbereichs über die Längserstreckung des Arbeitsbereichs in Form und/oder Dimensionierung variiert. Insbesondere für ebene Fügezonen ist ein rechteckiger Querschnitt des Arbeitsbereichs von Vorteil, da damit die ebene Fügezone gleichmäßig erwärmt werden kann.

Darüber hinaus kann es vorteilhaft sein, wenn der Arbeitsbereich ein Hohlprofil umfasst, welches wenigstens eine Öffnung aufweist, insbesondere wobei die wenigstens eine Öffnung sich im Wesentlichen über die gesamte oder vollständige Längserstreckung des Arbeitsbereichs erstreckt. Der Arbeitsbereich kann gleichzeitig in verschiedenen Bereichen mit verschiedenen Profilformen oder Querschnittsformen ausgebildet sein. Ebenso ist es möglich, dass der gesamte Arbeitsbereich im Wesentlichen mit einer gleichbleibenden Profilform oder Querschnittsform ausgebildet ist, deren Maße und/oder Dimensionierung gleichbleibend sein kann oder die in einem bestimmten Bereich des Arbeitsbereichs variieren können.

Gemäß der Erfindung weist der Arbeitsbereich entlang seiner Längserstreckung eine oder mehrere Krümmungen oder Biegungen auf. Insbesondere kann der Arbeitsbereich wenigstens einen oder zwei oder mehrere geradlinig ausgebildete Abschnitte und wenigstens einen oder zwei oder mehrere gekrümmte Abschnitte aufweisen oder der Arbeitsbereich kann sich in oder entlang seiner Längserstreckung innerhalb von zwei räumlichen Dimensionen erstrecken oder der Arbeitsbereich kann sich in oder entlang seiner Längserstreckung innerhalb von drei räumlichen Dimensionen erstrecken.

Somit kann der Arbeitsbereich vorteilhaft an die Form und/oder Dimensionierung der Schweißnaht angepasst werden. Besonders vorteilhaft können Fügezonen von Schweißnähten, die sich auf oder entlang von frei geformten Oberflächen mit Krümmungen, Stufen oder ähnlichen geometrischen Strukturen erstrecken mit an die Fügezonen speziell angepassten Emittern geschweißt werden.

In einer weiteren Ausgestaltung ist der Infrarot-Strahlungsemitter dazu vorgesehen, einen begrenzten Bereich einer Oberfläche eines Werkstücks zu erwärmen und der Arbeitsbereich ist entsprechend einer Form des begrenzten Bereichs geformt, insbesondere wobei der Arbeitsbereich eine oder mehrere Krümmungen oder Biegungen aufweist, die einer oder mehreren Krümmungen oder Biegungen des begrenzten Bereichs entsprechen.

Auch eine solche Ausführungsform erlaubt es, den Arbeitsbereich des Emitters in günstiger Art und Weise an die vorgesehene Gestalt der Schweißnaht anzupassen. Somit sind Schweißnähte mit komplexer Formgebung schweißbar.

Ferner kann es vorteilhaft sein, wenn der Emitterkörper einen Arbeitsbereich aufweist, der wenigstens einen ersten Abschnitt mit einem ersten elektrischen Widerstandswert und/oder mit einem ersten Querschnitt und wenigstens einen zweiten Abschnitt, mit einem von dem ersten elektrischen Widerstandswert abweichenden, insbesondere höherem, zweiten elektrischen Widerstandswert und/oder mit einem von dem ersten Querschnitt abweichenden, insbesondere kleineren, Querschnitt aufweist, wobei im Betrieb des Infrarotstrahlungs-Emitters der erste Abschnitt eine geringere Temperatur erreicht als der zweite Abschnitt.

Bei gleichbleibendem Stromfluß durch den Emitterkörper erreicht ein Abschnitt des Arbeitsbereiches mit größerem Querschnitt aufgrund seines geringeren elektrischen Widerstandes eine geringere Temperatur als ein Abschnitt mit kleinerem Querschnitt, sofern in beiden Abschnitten der materialabhängige spezifische Widerstand gleich bleibt. Da die von dem ersten Abschnitt und dem zweiten Abschnitt abgestrahlte Infrarotstrahlung abhängig von der Temperatur des jeweiligen Abschnitts ist, ist es dadurch möglich einen Arbeitsbereich mit Abschnitten mit kleinerem Querschnitt auszustatten, die mehr Energie in Form von Infrarotstrahlung emittieren, und zugleich mit Abschnitten mit größerem Querschnitt, die vergleichsweise weniger Energie in Form von Infrarotstrahlung emittieren. Dies ist insbesondere bei Schweißaufgaben von Bedeutung, bei denen beispielsweise Materialien geschweißt werden sollen, deren Absorptionsverhalten für Infrarotstrahlung in abschnittsweise variiert.

Alternativ oder zusätzlich weist der Emitterkörper einen Arbeitsbereich sowie wenigstens, vorzugsweise genau, zwei, insbesondere einstückig, mit dem Arbeitsbereich verbundene Kontaktierungsbereiche auf, die für den Anschluss von elektrischen Kontakten vorgesehen sind, insbesondere wobei die Kontaktierungsbereiche jeweils größere Querschnitte oder grö-βere Querschnittsflächen aufweisen, als der Querschnitt oder eine Querschnittsfläche des Arbeitsbereichs.

Da die Wärmeentwicklung innerhalb des Arbeitsbereichs von dem Verhältnis seiner Querschnittsfläche zur spezifischen Leitfähigkeit abhängt, ist es vorteilhaft, die Kontaktierungsbereiche, die ebenfalls vom Betriebsstrom durchflossen werden, mit einer größeren Querschnittsfläche zu versehen, so dass die Wärmeentwicklung in den Kontaktierungsbereichen verringert wird. Auf diese Weise kann eine unerwünschte übermäßige Erwärmung im Bereich der elektrischen Kontaktierung vermieden werden.

Ebenfalls alternativ oder zusätzlich sind die Kontaktierungsbereiche durch eine Öffnung voneinander beabstandet, vorzugsweise wobei der Abstand zwischen den Kontaktierungsbereichen geringer ist als eine Wandbreite und eine Wandstärke eines Arbeitsbereichs-Querschnitts. Mit einem. Durch die Öffnung wird die elektrische Trennung der wenigstens zwei Kontaktierungsbereiche gewährleistet, die demgemäß jeweils mit den entsprechenden Polen der elektrischen Energiequelle verbunden werden können. Um insbesondere beim Schweißen von Gehäusen, beispielsweise durch Verbindung von zwei Halbschalen, eine hermetische Dichtigkeit der Schweißverbindung zwischen den Halbschalen zu gewährleisten, ist der Abstand zwischen den Kontaktierungsbereichen möglichst gering zu wählen.

Alternativ oder zusätzlich weist der Emitterkörper einen Arbeitsbereich sowie mittelbar oder unmittelbar, insbesondere einstückig, mit dem Arbeitsbereich verbundene Haltebereiche auf, die für die Anordnung und/oder Fixierung des Arbeitsbereichs an Maschinenelementen, insbesondere Vorschubelementen oder Handhabungselementen oder Halteelementen einer Maschine, insbesondere einer Schweißanlage, vorzugsweise einer Kunststoffschweißanlage, vorgesehen sind, insbesondere wobei die Haltebereiche jeweils größere Querschnitte oder größere Querschnittsflächen aufweisen, als der Querschnitt oder eine Querschnittsfläche des Arbeitsbereichs und/oder wobei die Haltebereiche gegenüber dem Arbeitsbereich thermisch isoliert sind.

Auch bei den Haltebereichen ist es vorteilhaft, wenn deren Erwärmung gegenüber der Erwärmung des Arbeitsbereichs reduziert ist oder wenn die Haltebereiche gegenüber der Arbeitsmaschine, in welcher der Emitter eingesetzt wird thermisch isoliert sind. Dadurch kann vermieden werden, dass zum Arbeitsbereich benachbarte Maschinenbereiche übermäßig erwärmt werden.

Ferner ist es alternativ oder zusätzlich möglich, dass wenigstens ein, insbesondere alle, Kontaktierungsbereiche als Haltebereiche ausgebildet sind.

Ebenso kann der Emitterkörper alternativ oder zusätzlich eine oder mehrere integral mit dem Emitterkörper geformte Stützstrukturen aufweisen. Diese Stützstrukturen können dazu vorgesehen sein, den Emitterkörper während der Herstellung des Infrarotstrahlungs-Emitters in dem 3-D-Druckverfahren abzustützen. Dies kann insbesondere bei Bauteilen notwendig sein, deren Geometrie im Druckprozess eine Abstützung erfordert, solange das Druckmaterial noch weich oder pastös und noch nicht ausreichend verfestigt ist, um das Eigengewicht des Bauteils zu trägen. Dies ist vor allem bei Bauteilen mit überhängenden oder schrägstehenden Geometrien der Fall. Insbesondere ist es vorteilhaft, wenn die Stützstrukturen nach der Herstellung des Emitterkörpers als Kontaktierungsbereich(e) und/oder als, vorzugsweise elektrisch isolierende, Haltebereich(e) und/oder als, vorzugsweise elektrisch isolierende, Maskierungsbereich(e) ausgebildet sind.

Als Maskenbereiche sollen dabei solche Bereiche des Emitterkörpers verstanden werden, die beispielsweise in einem Schweißverfahren unter Verwendung des Emitterkörpers solche Bereiche des oder der zu schweißenden Bauteile oder des zu schweißenden Materials, die nicht mit Infrarotstrahlung beaufschlagt werden sollen, von der vom Emitterkörper abgestrahlten Infrarotstrahlung abschirmen oder abschatten.

Dies ist besonders von Vorteil, wenn der Emitterkörper kompakt und klein ausgebildet sein soll, beispielsweise zur Herstellung einer Schweißnaht aus mehreren Schweißpunkten oder einer kurzen linienförmigen Schweißnaht.

In einer weiteren Ausgestaltung der Erfindung ist die erste Materialkomponente ein Halbleitermaterial, insbesondere Siliziumkarbid oder Siliziumnitrid oder eine Mischung aus Siliziumkarbid und Siliziumnitrid,
oder
die erste Materialkomponente weist Sauerstoffionen-Leitfähigkeit auf, insbesondere wobei die erste Materialkomponente, insbesondere mit Yttriumoxid, dotiertes Zirkoniumoxid umfasst.

Es wurde gefunden, dass Emitterkörper besonders vorteilhaft aus Siliziumkarbid oder Siliziumnitrid oder einer Mischung aus Siliziumkarbid und Siliziumnitrid oder aus dotiertem Zirkoniumoxid bereitgestellt sein können. Diese Materialien zeigen eine geeignete Abhängigkeit der elektrischen Leitfähigkeit von der Temperatur. Bei einem diese Materialen umfassenden Emitterkörper, insbesondere aus Siliziumkarbid, kann die Leitfähigkeit in kaltem Zustand durch Zusatz eines als elektrischer Leiter fungierenden Materials wie beispielsweise Graphit oder Molybdändisilicid oder Titannitrid oder Silizium, insbesondere durch eine Dotierung mit Graphit, optimiert werden. Bei einem Emitterkörper aus, insbesondere mit Yttriumoxid, dotiertem Zirkoniumoxid, das Sauerstoffionen-Leitfähigkeit aufweist, kann zur Erzielung des gleichen Effekts ebenfalls Graphit beigemischt werden. Alternativ oder zusätzlich zu Graphit kann auch ein metallischer Leiter beigemischt werden. Die genannten Materialien sind zudem ausreichend robust, formstabil und temperaturbeständig. Als besonders vorteilhaft hat sich eine Kombination aus Siliziumkarbid als erster Materialkomponente und Molybdändisilicid als zweiter Materialkomponente erwiesen.

Gemäß der Erfindung erhöht die zweite Materialkomponente die elektrische Leitfähigkeit des keramischen Materials in einem Temperaturbereich unterhalb von 700° Celsius. Insbesondere umfasst die zweite Materialkomponente Kohlenstoff, vorzugsweise Graphit. Alternativ kann die zweite Materialkomponente Molybdändisilicid oder Titannitrid oder Silizium umfassen.

In einer alternativen vorteilhaften Ausführungsform kann als zweite Materialkomponente Yttriumoxid vorgesehen sein, insbesondere wobei Zirkoniumoxid als erste Materialkomponente mit Yttriumoxid als zweiter Materialkomponente dotiert ist.

Insbesondere bei Siliziumkarbid kann die elektrische Leitfähigkeit in einem niedrigen Temperaturbereich, beispielsweise unterhalb von 700°C dadurch gesteigert werden, dass dem Siliziumkarbid Kohlenstoff, insbesondere in Form von Graphit beigemischt wird. Der gleiche technische Effekt wird bei Zirkoniumoxid erreicht, indem es mit Yttriumoxid dotiert wird. Durch die Erhöhung der elektrischen Leitfähigkeit in einem niedrigen Temperaturbereich kann der Infrarotstrahlungs-Emitter durch elektrischen Stromfluss erhitzt werden, ohne dass eine Vorheizung benötigt wird. So können die gewünschten Einsatztemperaturen des Emitters sehr schnell erreicht werden. Bei einer Kombination aus Siliziumkarbid als Materialkomponente A und Molybdändisilicid als Materialkomponente B werden in vorteilhafter Weise besonderes hohe Betriebstemperaturen von bis zu 1800°C erreicht.

Besonders vorteilhaft kann es sein, wenn der Arbeitsbereich eine nicht weiße Färbung, insbesondere eine Graufärbung, vorzugsweise eine Dunkelgraufärbung, oder eine Schwarzfärbung aufweist.

Ferner ist es vorteilhaft, wenn der Infrarotstrahlungs-Emitter wenigstens einen ersten Bereich aufweist, in dem das keramische Material die erste Materialkomponente und die zweite Materialkomponente umfasst und wobei der Infrarotstrahlungs-Emitter wenigstens einen zweiten Bereich aufweist, in dem das keramische Material die erste Materialkomponente und die zweite Materialkomponente umfasst, wobei ein Mischungsverhältnis von erster Materialkomponente zu zweiter Materialkomponente in dem ersten Bereich sich von einem Mischungsverhältnis von erster Materialkomponente zu zweiter Materialkomponente in dem zweiten Bereich unterscheidet, vorzugsweise wobei die zweite Materialkomponente in dem zweiten Bereich wesentlich geringer vorhanden ist als in dem ersten Bereich, so dass die elektrische Leitfähigkeit des zweiten Bereichs gegenüber der elektrischen Leitfähigkeit des ersten Bereichs wesentlich reduziert ist,

Alternativ oder zusätzlich kann vorgesehen sein, dass der Infrarotstrahlungs-Emitter wenigstens einen ersten Bereich aufweist, in dem das keramische Material die erste Materialkomponente und die zweite Materialkomponente umfasst und wobei der Infrarotstrahlungs-Emitter wenigstens einen zweiten Bereich aufweist, in dem das keramische Material die erste Materialkomponente ohne die zweite Materialkomponente umfasst, vorzugsweise wobei das keramische Material in dem zweiten Bereich ausschließlich die erste Materialkomponente oder die erste Materialkomponente und eine weitere, die elektrische Leitfähigkeit reduzierende Materialkomponente, umfasst, insbesondere wobei der wenigstens eine erste Bereich ein Arbeitsbereich ist und wobei der wenigstens eine zweite Bereich eine Stützstruktur und/oder ein Haltebereich und/oder ein Maskierungsbereich des Emitterkörpers ist.

Auf diese Weise können Teile der gegenüber der ersten Materialkomponente teureren zweite Materialkomponente kostenreduzierend eingespart werden. Darüber hinaus können Haltebereiche und/oder Stützstrukturen und/oder Maskierungsbereiche aus Bereichen des Emitterkörpers gebildet werden, die gegenüber dem Arbeitsbereich eine wesentlich niedrigere elektrische Leitfähigkeit aufweisen und somit in wesentlich geringerem oder gar keinem Maße einem Stromfluß unterliegen. Außerdem ist es auf diese Weise möglich Stützstrukturen an dem Emitterkörper anzuformen, die nach dem Herstellungsprozess an dem Emitterkörper belassen werden und im Normalbetrieb als Haltebereiche und/oder Maskierungsbereiche genutzt werden können. Stützstrukturen, die aus demselben Material des Arbeitsbereichs gebildet sind, müssen üblicherweise nach dem Herstellungsprozess vom Emitterkörper manuell getrennt werden. Besonders vorteilhaft ist es darüber hinaus, wenn der Infrarotstrahlungs-Emitter in einem ersten Bereich die erste Materialkomponente und die zweite Materialkomponente umfassend und einem zweiten Bereich die erste Materialkomponente ohne die zweite Materialkomponente oder mit einer weiteren, die elektrische Leitfähigkeit reduzierenden Materialkomponente umfassend, in einem 2-Komponenten 3-D-Druckverfahren hergestellt wird.

Ein dunkler, insbesondere grau, dunkelgrau oder schwarz gefärbter Arbeitsbereich weist einen höheren Emissionsgrad für infrarote Strahlung auf als ein hell oder weiß gefärbter Arbeitsbereich. Eine dunkle Färbung wird beispielsweise durch eine Mischung von Siliziumkarbid mit Graphit erzielt.

Ferner kann es vorteilhaft sein, wenn der Infrarotstrahlungs-Emitter mit einer elektrischen Stromquelle oder elektrischen Spannungsquelle verbunden ist und mit einem variablen definierten Betriebsstrom oder einer variablen definierten Betriebsspannung, insbesondere einem definierten Gleichstrom oder einer definierten Gleichspannung, vorzugsweise mit einer Stromstärke in einem Bereich zwischen 20 Ampere und 40 Ampere, betreibbar ist oder betrieben wird, und wobei der Infrarotstrahlungs-Emitter in wenigstens einem oberen Temperaturbereich mit einem niedrigeren Betriebsstrom oder einer niedrigeren Betriebsspannung betreibbar ist oder betrieben wird als in einem unteren Temperaturbereich.

Auf diese Weise kann sichergestellt werden, dass die abgestrahlte Infrarotwärmestrahlung, die bei dem erfindungsgemäßen Infrarotstrahlungs-Emitter in einem oberen Temperaturbereich lawinenartig zunehmen kann, nicht unbegrenzt ansteigt, so dass die abgestrahlte Wärmeenergie zumindest innerhalb einer bestimmten Bandbreite konstant gehalten werden kann.

In einer weiteren vorteilhaften Ausgestaltung der Erfindung ist der Infrarotstrahlungs-Emitter mit einer elektrischen Stromquelle oder einer elektrischen Spannungsquelle verbunden und umfasst eine aktive Regelung der elektrischen Stromquelle oder einer elektrischen Spannungsquelle, insbesondere wobei die aktive Regelung als Regelkreis realisiert ist, in dem ein Temperatursensor, insbesondere ein Pyrometer, vorgesehen ist, der die Ist-Temperatur des Emitterkörpers ermittelt, wobei die Ist-Temperatur mit einer voreinstellbaren oder voreingestellten Soll-Temperatur verglichen wird und wobei die Stromquelle oder die Spannungsquelle entsprechend einer aus dem Vergleich resultierenden Abweichung der Ist-Temperatur von der Soll-Temperatur, insbesondere selbsttätig mittels eines Aktors, aktiv geregelt wird. Alternativ kann eine aktive Regelung der Temperatur des Infrarotstrahlungs-Emitters auch dadurch erfolgen, dass dieser mit einer konstanten Spannung oder einem konstanten Strom betrieben wird, wobei bei konstanter Spannung der durch den Infrarotstrahlungs-Emitter fließende Strom gemessen wird, beziehungsweise bei konstantem Strom, die über dem Infrarotstrahlungs-Emitter abfallende Spannung gemessen wird. Aus dem sich ergebendem Strom/Spannungs-Verhältnis ergibt sich der Widerstand des Infrarotstrahlungs-Emitter zum Zeitpunkt t, beziehungsweise über die Zeit t₀ bis tₓ, woraus sich unmittelbar die Temperatur des Infrarotstrahlungs-Emitters ableiten lässt. Bei der Inbetriebnahme des Infrarotstrahlungs-Emitter kann dieser beispielsweise in einer Schweißanlage kalibriert werden, so dass eine Temperaturregelung geschaffen werden kann, die die Betriebstemperatur im einem Bereich +/- 5°C einregeln kann. Gegenüber einer Messung mit einem Temperatursensor wie beispielsweise einem Pyrometer ist eine Temperaturregelung mit einer Spannungs- bzw. Strommessung direkter und weist somit eine wesentlich geringere Trägheit auf.

Da die elektrische Leitfähigkeit des Infrarotstrahlungs-Emitters mit steigender Temperatur ansteigt und gleichzeitig der vom Emitter abgestrahlte Wärmestrom ebenfalls mit steigender Temperatur ansteigt, ist es vorteilhaft eine automatische Regelung des Betriebsstroms vorzusehen, so dass der abgestrahlte Wärmestrom konstant gehalten werden kann. Dadurch kann der Infrarotstrahlungs-Emitter konstant hohe Schweißenergie abgeben, wodurch die Qualität des Schweißprozesses gewährleistet werden kann.

Die Aufgabe der Erfindung wird außerdem durch eine Schweißanlage, insbesondere eine Kunststoffschweißanlage, mit einem erfindungsgemäßen Infrarotstrahlungs-Emitter gelöst.

Zudem wird die Aufgabe der Erfindung durch ein Schweißverfahren, insbesondere ein Kunststoffschweißverfahren, insbesondere unter Verwendung eines erfindungsgemäßen Infrarotstrahlungs-Emitters oder zur Durchführung in einer erfindungsgemäßen Schweißanlage, gelöst, welches die folgenden Schritte umfasst:
- Auswahl einer Temperatur, insbesondere in einem Bereich zwischen 1000°C und 1900°C, bevorzugt in einem Bereich zwischen 1200°C und 1800°C, besonders bevorzugt in einem Bereich zwischen 1400°C und 1800°C, des Emitterkörpers in Abhängigkeit von einem Absorptionskoeffizienten des zu schweißenden Materials für von dem Emitterkörper abstrahlbare Infrarotstrahlung und in Abhängigkeit von einer gewünschten Eindringtiefe der abstrahlbaren Infrarotstrahlung in das zu schweißende Material;
- Erhitzen des Emitterkörpers auf die ausgewählte Temperatur;
- Aufschmelzen des zu schweißenden Materials durch die von dem Emitterkörper bei der ausgewählten Temperatur abgestrahlten Infrarotstrahlung;

Durch die Wahl der Temperatur kann das Emissionsspektrum derart verändert werden das mehr oder weniger Energie an der Oberfläche des Kunststoffbauteils absorbiert wird. Dies wird beschrieben durch die optische Eindringtiefe. Die Erhöhung der Temperatur führt dabei zu einer Verschiebung des Wellenlängenspektrums in Richtung kürzerer Wellenlängen. Anders gesagt führt die Erhöhung der Temperatur zu einer Verschiebung eines Maximums der abgestrahlten Infrarotstrahlung in einen Bereich kürzerer Wellenlängen. Unpigmentierte Kunststoffe absorbieren längere Wellenlängen stärker als kurze Wellenlängen. Somit kann bei unpigmentierten Kunststoffen mit einer niedrigeren Emittertemperatur zu schweißendes Material tiefer aufgeschmolzen werden als mit einer höheren Emittertemperatur. Bei unpigmentierten Kunststoffen kann also durch Auswahl einer geringeren Emittertemperatur das Absorptionsverhalten optimiert werden. Durch eine auf die spezifischen Materialeigenschaften abgestimmte Temperatur ist es daher möglich einzustellen, wie viel Material für den Schweißprozess aufgeschmolzen werden soll. Dadurch wird außerdem der Wirkungsgrad des Infrarotstrahlungs-Emitters gesteigert.

Vorteilhaft ist es dabei, wenn zum Erhitzen des Emitterkörpers ein definierter Betriebsstrom oder eine definierte Betriebsspannung an den Arbeitsbereich angelegt wird, wobei der definierte Betriebsstrom oder die definierte Betriebsspannung bei Erreichen der ausgewählten Temperatur oder einer definierten Temperatur unterhalb der ausgewählten Temperatur so geregelt oder gesteuert wird, dass die ausgewählte Temperatur nicht überschritten wird oder die Temperatur des Arbeitsbereichs, insbesondere innerhalb eines definierten Temperaturbandes, konstant bleibt.

Bei einem Emitterkörper gemäß der Erfindung steigt die elektrische Leitfähigkeit mit zunehmender Temperatur. Da im Betrieb die Temperatur erhöht wird, würde bei gleichbleibendem Betriebsstrom oder -spannung aufgrund der steigenden Leitfähigkeit die Temperatur sprunghaft oder lawinenartig ansteigen. Um eine definierte Temperatur wenigstens für eine gewisse Dauer zu erreichen oder konstant zu halten, ist es sinnvoll, den Betriebsstrom oder die Betriebsspannung entsprechend zu steuern oder zur regeln. Beispielsweise kann dies geschehen, indem der Infrarotstrahlungs-Emitter mit einer konstanten Spannung oder einem konstanten Strom betrieben wird, wobei bei konstanter Spannung der durch den Infrarotstrahlungs-Emitter fließende Strom gemessen wird, beziehungsweise bei konstantem Strom, die über dem Infrarotstrahlungs-Emitter abfallende Spannung gemessen wird. Aus dem sich ergebendem Strom/Spannungs-Verhältnis ergibt sich der Widerstand des Infrarotstrahlungs-Emitter zum Zeitpunkt t, beziehungsweise über die Zeit t₀ bis tₓ, woraus sich unmittelbar die Temperatur des Infrarotstrahlungs-Emitters ableiten lässt. In einem dem Schweißverfahren vorausgehenden Kalibrierschritt, kann die Regelung auf den jeweils verwendeten individuellen Infrarotstrahlungs-Emitter kalibriert werden, so dass eine Temperaturregelung geschaffen werden kann, die die Betriebstemperatur im einem Bereich +/-5°C einregeln kann. Gegenüber einer Messung mit einem Temperatursensor wie einem Pyrometer ist eine Temperaturregelung mit einer Spannungs- bzw. Strommessung direkter und weist somit eine wesentlich geringere Trägheit auf.

In einer weiteren Ausgestaltung erwärmt der Emitterkörper das oder die zu schweißenden Werkstücke berührungslos. Insbesondere kann der Emitterkörper in einem Abstand von mindestens 2 mm zur Oberfläche des zu schweißenden Werkstücks angeordnet werden. Vorzugsweise kann der Emitterkörper an die Oberfläche des zu schweißenden Werkstücks heranbewegt werden oder das oder die zu schweißenden Werkstücke können an den Emitterkörper heranbewegt werden.

Auf diese Weise kann der erfindungsgemäße Emitter für das kontaktlose, bzw. berührungslose Schweißen eingesetzt werden. Der für die Schweißnaht vorgesehene Werkstückbereich kann dadurch sehr schnell erhitzt werden. Durch das berührungslose Verfahren wird vermieden, dass an den die Werkstückoberfläche kontaktierenden Schweißelementen aufgeschmolzenes Material haften bleibt. Zudem kann der erfindungsgemäße Emitter sehr schnell aus dem Raum zwischen den Fügepartnern herausgefahren werden, so dass der Zeitbedarf zum Verfahren der Werkzeuge und zum Zusammenführen der Fügepartner, während der die aufgeschmolzenen Bereiche wieder erkalten, möglichst gering bleibt.

Ebenfalls vorteilhaft ist ein Herstellungsverfahren für einen erfindungsgemäßen Infrarotstrahlungs-Emitter, wobei der Emitterkörper, insbesondere der vollständige Infrarotstrahlungs-Emitter, mittels eines 3-D-Druckverfahrens aus einem Keramikpulver hergestellt wird, insbesondere wobei das Keramikpulver ein Graphitpulver oder Graphitgranulat oder Molybdändisilicid MoSi₂ umfasst. Bei dem 3-D-Druckverfahren wird ein offenporiger Grünling umfassend ein Graphitpulver oder Molybdändisilicid MoSi₂ gedruckt und mittels eines Phenolharzes gebunden. Anschließend wird der Grünling mit flüssigem Silizium getränkt, beziehungsweise infiltriert. Anschließend wird der getränkte Grünling erhitzt, wobei das Silizium zu Siliziumkarbid reagiert und sich verfestigt.

Als alternatives Herstellungsverfahren insbesondere für Infrarotstrahlungs-Emitter aus Siliziumkarbid als erster Materialkomponente (A) und mit Molybdändisilicid MoSi₂ als zweiter Materialkomponente (B) hat sich das sogenante Fused Layer Modeling (FLM) oder auch Fused Filament Fabrication (FFF) erwiesen.

Ein alternativ oder zusätzlich vorteilhaftes Herstellungsverfahren für einen erfindungsgemäßen Infrarotstrahlungsemitter umfasst ein Zwei-Komponenten-3-D-Druckverfahren. Bei diesem Verfahren wird der Emitterkörper gleichzeitig oder sequenziell aus zwei unterschiedliche Materialien gedruckt. Insbesondere ist es mit einem solchen Verfahren möglich, Emitterkörper herzustellen, die Strukturen aus einem Material umfassend eine erste Materialkomponente (A), insbesondere Siliziumkarbid und eine zweite Materialkomponente (B), insbesondere Molybdändisilicid MoSi₂, und aus einem weiteren Material, beispielsweise umfassend die erste Materialkomponente (A), insbesondere Siliziumkarbid, ohne eine weitere Materialkomponente oder auch mit einer weiteren, die elektrische Leitfähigkeit reduzierenden Materialkomponente herzustellen.

Dadurch ist die Möglichkeit geboten, Emitterkörper herzustellen, die Strukturen von sehr hoher Leitfähigkeit und gleichzeitig Strukturen von deutlich niedrigerer Leitfähigkeit umfassen, wobei diese unterschiedlichen Strukturen integral miteinander verbunden sein können. Da der wesentliche Anteil des durch den Emitterkörper fließenden Stroms durch diejenigen Bereiche des Emitterkörpers mit der höchsten Leitfähigkeit fließt und der Stromfluß durch diejenigen Bereiche mit wesentlich geringerer Leitfähigkeit entsprechend verringert ist, werden die Bereiche mit wesentlich geringerer Leitfähigkeit im Betrieb des Emitterkörpers auch nur in wesentlich geringerem Maße erwärmt. Auf diese Weise kann der Emitterkörper mit Stützstrukturen, Haltestrukturen und/oder Maskenstrukturen ausgebildet werden, die aufgrund ihrer sehr viel niedrigeren Leitfähigkeit im Betrieb nicht oder nur sehr gering von Strom durchflossen werden und so sehr viel weniger erwärmt werden.

Auf diese Weise können Infrarotstrahlungs-Emitter hergestellt werden, deren Form auf die beabsichtigte Form der Schweißnaht in einem Schweißprozess abgestimmt ist. Es wird dadurch möglich, sehr komplexe Schweißnahtformen zu realisieren.

In einer vorteilhaften Ausführungsform des Herstellungsverfahrens ist der Infrarotstrahlungs-Emitter für eine Schweißanwendung vorgesehen und das Herstellungsverfahren umfasst die folgenden zusätzlichen Schritte:
a) Ermitteln der geometrischen Gestalt einer zu erwärmenden, insbesondere dreidimensionalen, Schweißnahtgeometrie, insbesondere durch Ableitung aus einer CAD-Zeichnung oder durch Messung an einem Musterbauteil;
b) Erzeugen eines Datensatzes mit geometrischen Daten aus der ermittelten geometrischen Gestalt, insbesondere unter Hinzufügen weiterer geometrischer Daten zur Erzeugung einer datenbasierten Repräsentanz eines herzustellenden Emitterkörpers, und Übergabe dieses Datensatzes an eine 3-D-Druckmaschine;
c) Ausführen eines 3-D-Druck-Herstellungsprozesses gemäß der vorgegebenen geometrischen Daten durch die 3-D-Druckmaschine und Herstellen wenigstens des Emitterkörpers, vorzugsweise des vollständigen Infrarotstrahlungs-Emitters, aus dem Keramikpulver;

Auf diese Weise kann ein integrierter Herstellungsprozess für den Infrarotstrahlungs-Emitter bereitgestellt werden. Insbesondere ist es möglich, aus einer Fertigungszeichnung der zu schweißenden Fügepartner die gewünschte Geometrie der Schweißnaht abzuleiten und aus dieser Schweißnahtgeometrie wiederum die Geometrie des Emitterkörpers zur Erzeugung der Schweißnaht zu definieren und den entsprechenden Emitterkörper anschließend automatisiert herzustellen.

Vorteilhafte Ausgestaltungen und Weiterbildungen gemäß der Erfindung ergeben sich aus den jeweils abhängigen Patentansprüchen und auch aus der nachfolgenden Beschreibung.

Die Erfindung wird im Folgenden anhand von Ausführungsbeispielen unter Bezugnahme auf die Zeichnungen weiter erläutert. Es zeigen jeweils in einer schematischen Darstellung:
- FIG 1: ein Diagramm zur Veranschaulichung der elektrischen Leitfähigkeit verschiedener Materialien in Abhängigkeit von der Temperatur;
- FIG 2: eine perspektivische Darstellung eines exemplarischen Emitterkörpers;
- FIG 3: eine Darstellung mehrerer Ausführungsbeispiele von Querschnittsformen für Emitterkörper;
- FIG 4: eine Darstellung eines weiteren Ausführungsbeispiels für einen Emitterkörper in Draufsicht;
- FIG 5: eine Darstellung in Seitenansicht des Emitterkörpers gemäß FIG 4;

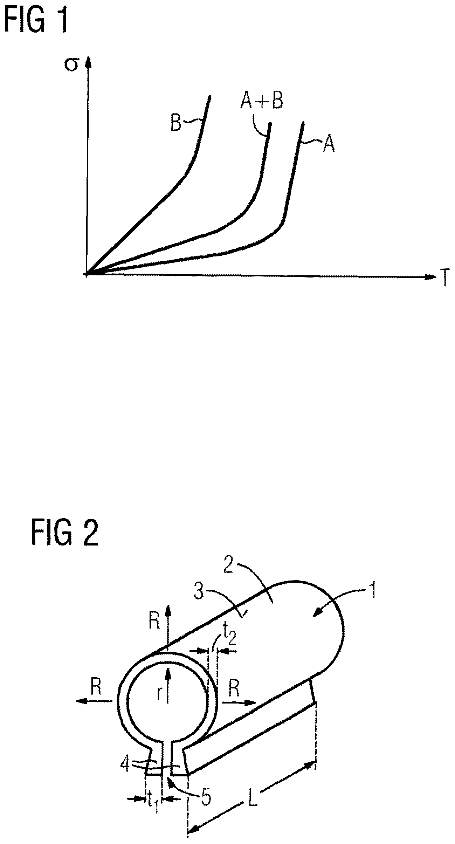

Einander entsprechende Teile und Größen sind in den Figuren FIG 1 bis 3 mit denselben Bezugszeichen versehen.

FIG 1 zeigt ein Diagramm zur Veranschaulichung der elektrischen Leitfähigkeit σ in Abhängigkeit von der Temperatur T für eine erste Materialkomponente A, eine zweite Materialkomponente B und ein zusammengesetztes Material umfassend sowohl eine erste als auch eine zweite Materialkomponente A + B.

Die erste Materialkomponente A kann ein Halbleitermaterial, beispielsweise Siliziumkarbid sein oder umfassen. Bei Anlegen eines elektrischen Stromes wird in einem Körper aus Siliziumkarbid aufgrund des elektrischen Widerstandes Strom in Wärme umgewandelt, wodurch die Temperatur des Körpers zunimmt.

Ein Körper aus Siliziumkarbid strahlt dabei einen von der Temperatur T des Körpers abhängigen Wärmestrom Q ab, wobei ein Intensitätsmaximum im infraroten Spektralbereich bei einer definierten Wellenlänge liegt.

Durch die Zunahme der Temperatur T des Körpers steigt die elektrische Leitfähigkeit σ des Körpers, was wiederum die Temperaturzunahme verstärkt. Es wurde beobachtet, dass bei Temperaturen oberhalb von 700°C die elektrische Leitfähigkeit σ eines Körpers aus Siliziumkarbid als erste Materialkomponente A deutlich höher ist und deutlich schneller zunimmt als bei Temperaturen unterhalb von 700°C. Insbesondere wurde beobachtet, dass bei Temperaturen in einem Bereich um 700°C die Zunahme der elektrischen Leitfähigkeit des Materials sprunghaft ansteigt. Entsprechend steigt die Zunahme der Temperatur T des Körpers in diesem Bereich sprunghaft an.

Beispielsweise Kohlenstoff, insbesondere in Form von Graphit als zweite Materialkomponente B zeigt gegenüber der elektrischen Leitfähigkeit der ersten Materialkomponente A in einem Temperaturbereich unterhalb von 700°C eine wesentlich höhere elektrische Leitfähigkeit. Zwar nimmt auch die elektrische Leitfähigkeit von Graphit B in einem Temperaturbereich oberhalb von 700°C stärker zu als unterhalb, jedoch zeigt diese keine sprunghafte Zunahme.

Es wurde beobachtet, dass ein Körper umfassend Siliziumkarbid als eine erste Materialkomponente A und Graphit als eine zweite Materialkomponente B ein günstiges Leitfähigkeit-Temperatur-Profil A+B aufweist. Die elektrische Leitfähigkeit wird durch Graphit in einem unteren Temperaturbereich unterhalb von 700°C gegenüber einem Körper, der ausschließlich aus Siliziumkarbid besteht, deutlich erhöht.

Dadurch erreicht der Körper bei Anlegen eines entsprechenden Betriebsstromes schneller eine Temperatur von 700°C. In einem oberen Temperaturbereich oberhalb von 700°C ist die elektrische Leitfähigkeit des Siliziumkarbids sehr hoch und erlaubt eine weitere schnelle Erhöhung der Temperatur T des Körpers und somit der Abstrahlung von Infrarotstrahlung R von der Oberfläche des Körpers.

FIG 2 zeigt eine perspektivische Darstellung eines Emitterkörpers 1.

Der Emitterkörper 1 weist einen langgestreckten Arbeitsbereich 2 mit einem hohlen, röhrenartigen Querschnitt auf. Der Querschnitt weist dabei eine Öffnung 5 auf, die sich entlang der gesamten Länge des Arbeitsbereichs 2 parallel zur Längsachse des Arbeitsbereichs 2 erstreckt. Selbstverständlich ist es ebenfalls möglich, dass sich die Öffnung 5 nicht parallel zur Längsachse, sondern beispielsweise spiralförmig oder in anderer Weise um diese herum erstreckt.

Begrenzt wird die Öffnung 5 dabei von Kontaktierungsbereichen 4, die sich von dem hohlen, röhrenartigen Querschnitt in radialer Richtung weg erstrecken. Die Kontaktierungsbereiche 4 sind dabei an sich gegenüberliegenden Rändern der Öffnung 5 angeordnet.

Im dargestellten Ausführungsbeispiel erstrecken sich die Kontaktierungsbereiche 4 ebenfalls parallel zur Längsachse des Arbeitsbereichs 2 über die gesamte Länge des Arbeitsbereichs 2. Gleichwohl ist es möglich, dass die Kontaktierungsbereiche 4 sich nur in einem Teil des Arbeitsbereichs 2 erstrecken oder ausschließlich in einem Endbereich des Arbeitsbereichs 2 angeordnet sind.

Zum Zwecke der Verbindung eines elektrischen Kontakts mit den Kontaktierungsbereichen 4 können diese beispielsweise eine Bohrung zur Aufnahme einer Kontaktschraube oder eine andere Kontaktstruktur aufweisen.

Ferner weisen im Falle des dargestellten Ausführungsbeispiels die Kontaktierungsbereiche 4 eine für den Durchfluss des elektrischen Stromes relevante größere Querschnittsfläche auf als die für den Durchfluss des elektrischen Stromes relevante Querschnittsfläche des hohlen, röhrenförmigen Querschnitts des Arbeitsbereichs 2. Damit ist insbesondere gemeint, dass mit Geltung für das dargestellte Ausführungsbeispiel die für den Durchfluss von elektrischem Strom relevante Breite t₁ der Kontaktierungsbereiche 4 größer sein kann als die Wanddicke t₂ des hohlen, röhrenförmigen Querschnitts. Durch diese Maßnahme kann bei Anlegen eines Betriebsstroms die Temperatur der Kontaktierungsbereiche 4 reduziert sein im Vergleich zur Temperatur des Arbeitsbereichs 2. Dies wiederum führt zu einer Schonung von thermisch weniger belastbaren Kontaktierungsmitteln, beispielsweise metallischen Schrauben oder Krallen, die zur elektrischen Kontaktierung an den Kontaktierungsbereichen 4 fixiert werden.

Die Kontaktierungsbereiche 4 können zudem als Haltebereiche ausgebildet sein, die für die Anordnung und/oder Fixierung des Arbeitsbereichs 2 an Maschinenelementen wie Vorschubelementen oder Handhabungselementen oder Halteelementen einer Schweißanlage, vorzugsweise einer Kunststoffschweißanlage, vorgesehen sein können.

Die Haltebereiche können dabei jeweils größere Querschnitte oder grö-βere Querschnittsflächen aufweisen, als der Querschnitt oder eine Querschnittsfläche des Arbeitsbereichs. Auch können die Haltebereiche gegenüber dem Arbeitsbereich thermisch isoliert sein.

In einer nicht dargestellten Ausführung ist es auch möglich, Haltebereiche vorzusehen, die von den Kontaktierungsbereichen abgegrenzt oder von diesen verschieden sind.

Der Querschnitt des Arbeitsbereichs 2 ist zudem so gestaltet, dass im Betrieb Infrarotstrahlung R in wenigstens zwei entgegengesetzten Richtungen in radialer Richtung abgestrahlt wird. Dadurch ist ein erfindungsgemäßer Emitterkörper 1 in einer Weise in einer Schweißanlage einsetzbar, in der der Emitterkörper 1 gleichzeitig die Schweißzonen zweier auf entgegengesetzten Seiten des Emitterkörpers 1 angeordneter Fügepartner erwärmen und aufschmelzen kann.

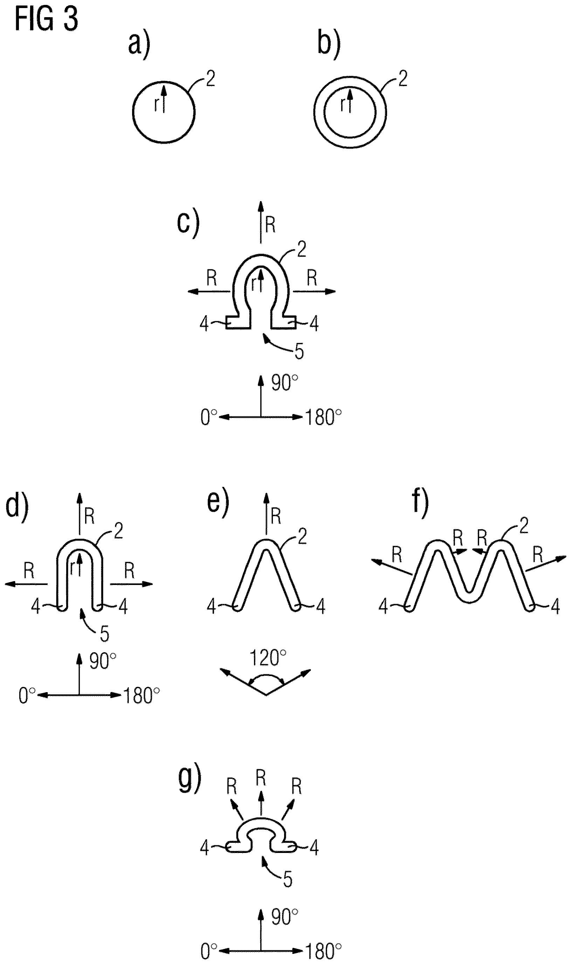

FIG 3 zeigt mehrere Ausführungsbeispiele von Querschnittsformen für Emitterkörper 1. Kontaktierungsbereiche 4 und Haltebereiche können in geeigneter Form an jeder der gezeigten Querschnittsformen vorgesehen sein.

Ausführungsform a) zeigt einen runden Querschnitt eines Arbeitsbereichs 2 aus einem Vollmaterial. Dieser Querschnitt ist für einen stabförmigen Arbeitsbereich geeignet.

Ausführungsform b) zeigt einen runden, hohlen Querschnitt. Ein solcher Querschnitt ist für einen rohrförmigen Arbeitsbereich 2 geeignet.

Ausführungsform c) zeigt einen Omega-förmigen Querschnitt mit einer Öffnung 5. Die Füße des Omega-förmigen Querschnitts können dabei als Kontaktierungsbereiche 4 dienen. Im Wesentlichen strahlt ein Arbeitsbereich 2 mit einem Omega-förmigen Querschnitt dabei gleichmäßig in einem Bereich von 0° bis 180° um einen Querschnittmittelpunkt ab.

Ausführungsform d) zeigt einen U-förmigen Querschnitt mit einer Öffnung 5. Ein U-förmiger Querschnitt kann dabei gerade Schenkel aufweisen, so dass Infrarotstrahlung von den geraden Schenkeln gleichmäßig abstrahlbar ist. Ein solcher Querschnitt kann geeignet sein, wenn eine relativ breite Fläche erwärmt werden soll.

Ausführungsform e) zeigt einen V-förmigen, Ausführungsform f) einen W-förmigen Querschnitt. Derartige Querschnitte können beispielsweise vorteilhaft sein, wenn die Fügeflächen vor dem Schweißen nicht parallel zueinander angeordnet werden können oder, im Falle des W-förmigen Querschnitts, wenn mehr als zwei Fügepartner verschweißt werden sollen.

Ausführungsform g) zeigt einen alternativen Omega-förmigen Querschnitt mit einer Öffnung 5 mit geringerer Höhe und größerer Breite verglichen mit Ausführungsform c). Mit diesem Querschnitt strahlt der Arbeitsbereich 2 ebenfalls in einem Bereich von 0° bis 180° um einen Querschnittmittelpunkt ab. Jedoch wird bei diesem Querschnitt ein wesentlich größerer Anteil der gesamten Abstrahlung in einem mittleren Bereich um 90° abgestrahlt und ein wesentlich kleinerer Anteil in den Randbereichen nahe 0° und nahe 180°.

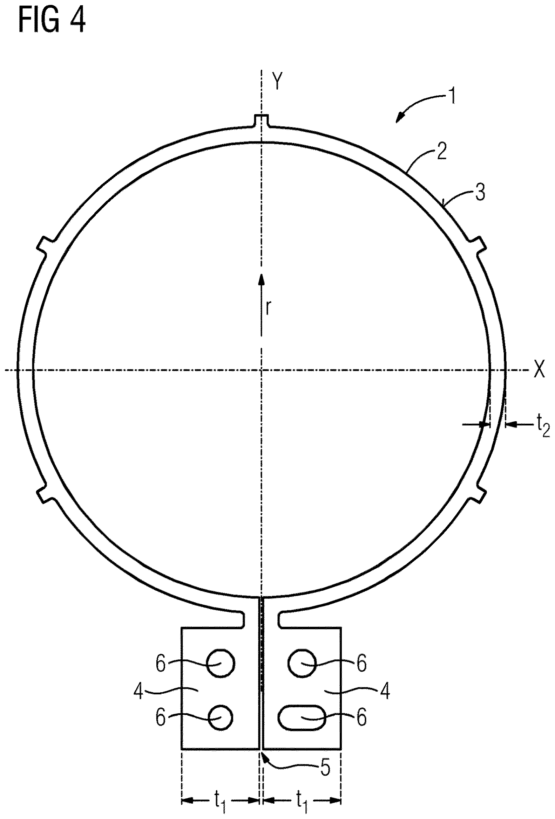

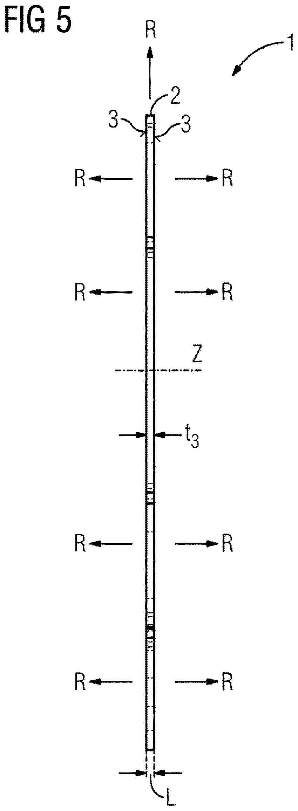

FIG 4 zeigt die Draufsicht und FIG 5 die Seitenansicht eines weiteren speziellen Ausführungsbeispiels eines Emitterkörpers 1. Der Emitterkörper 1 weist auch hier einen Arbeitsbereich 2 auf. Arbeitsbereich 2 weist die Gestalt eines sehr kurzen, kreisrunden Rohres auf. Das Rohr umfasst dabei eine Wandung mit einem rechteckigen Querschnitt mit einer Wandbreite tz und einer Wandstärke t₃. Die Wandbreite t₂ ist dabei größer als die Längserstreckung L des Arbeitsbereichs entlang der Z-Achse und die Wandstärke t₃ entspricht der Längserstreckung L. Ein derartiger Emitterkörper 1 ist vorteilhaft dazu ausgebildet, Rohre oder Rohrabschnitt miteinander zu verbinden. Der Emitterkörper 1 ist dabei so auf die zu verbindenden Rohre oder Rohrabschnitte abgestimmt, dass sein Durchmesser r x 2 und die Wandstärke t₂ im Wesentlichen dem Durchmesser und der Wandstärke t₂ der Rohre oder Rohrabschnitte entsprechen.

Im Schweißprozess wird der Emitterkörper 1 zwischen den zu verbindenden Rohren oder Rohrabschnitten angeordnet, so dass die entlang der Z-Achse abgestrahlte Infrarotstrahlung R die Stirnflächen der Rohre oder Rohrabschnitte erwärmt, bzw. aufschmilzt. In der gezeigten Ausführungsform wird Infrarotstrahlung R auch in radialer Richtung abgestrahlt, in diesem Fall trägt diese aber nicht oder nur unwesentlich zum Schweißprozess bei.

Nach dem Aufschmelzen wird der Emitterkörper 1 aus dem Bereich zwischen den zu verbindenden Rohren oder Rohrabschnitten herausgefahren und die aufgeschmolzenen Stirnflächen der Rohre oder Rohrabschnitte werden miteinander in Kontakt gebracht und gegebenenfalls unter definiertem Druck miteinander verbunden.

Mit dem Arbeitsbereich 2 sind zwei sich gegenüberliegende Kontaktierungsbereiche 4, die jeweils zwei Kontaktierungsöffnungen oder Kontaktierungsbohrungen 6 aufweisen, in denen Schrauben zur elektrischen Kontaktierung des Emitterkörpers 1 fixiert werden können. Jeder der Kontaktierungsbereiche 4 weist dabei eine Breite t₁ auf die größer ist als die Wandstärke t₂ der Rohrwandung des Arbeitsbereichs 2. Auf diese Weise ist der für die Umwandlung des elektrischen Stroms in Wärme maßgebliche Querschnitt der Kontaktierungsbereiche 4 größer als der maßgebliche Querschnitt der Rohrwandung. So wird sichergestellt, dass die Kontaktierungsbereiche 4 in geringerem Maße aufgeheizt werden als die Rohrwandung des Arbeitsbereichs 2.

Die Kontaktierungsbereiche 4 sind zudem durch eine Öffnung 5 voneinander getrennt, so dass der Arbeitsbereich kein völlig geschlossenes Rohr bildet. Da im Anwendungsfall der Rohrschweißung die Schweißnaht hermetisch dicht sein soll, so wird der durch die Öffnung 5 gebildete Abstand zwischen den Kontaktierungsbereichen 4 dabei möglichst gering ausgelegt und beträgt im gezeigten Ausführungsbeispiel einen 1 mm.

Um im Schweißprozess eine vollständig geschlossene und hermetisch dichte Schweißnaht zwischen den zu schweißenden Rohren oder Rohrabschnitten herzustellen, ist außerdem sicherzustellen, dass der Arbeitsbereich um den Bereich der Öffnung 5 herum ausreichend aufgeheizt wird, so dass eine Überstrahlung im Bereich der Öffnung 5 das aufzuschmelzende Material in ausreichendem Maße aufschmilzt.

### Bezugszeichen liste

- 1: Emitterkörper
- 2: Arbeitsbereich
- 3: Oberfläche des Arbeitsbereichs
- 4: Kontaktierungsbereiche
- 5: Öffnung
- 6: Kontaktierungsbohrung

- r: Radius
- A: erste Materialkomponente
- B: zweite Materialkomponente

- σ: elektrische Leitfähigkeit
- T: Temperatur
- R: Infrarotstrahlung

- t₁: Breite eines Kontaktierungsbereichs
- t₂: Wandbreite eines Arbeitsbereichs-Querschnitts
- t₃: Wandstärke eines Arbeitsbereichs-Querschnitts
- L: Längserstreckung des Arbeitsbereichs

- X: X-Achse
- Y: Y-Achse
- Z: Z-Achse

## Patentansprüche

1. Infrarotstrahlungs-Emitter mit einem Emitterkörper (1), der ein keramisches Material umfasst und wobei der Emitterkörper (1) einen Arbeitsbereich (2) aufweist, der bei Anlegen eines elektrischen Stromes inkohärente Infrarotstrahlung (R) abgibt, wobei das keramische Material eine erste Materialkomponente (A) umfasst, die eine mit zunehmender Temperatur zunehmende elektrische Leitfähigkeit (σ) aufweist und wobei das keramische Material eine zweite Materialkomponente (B) aufweist, die die elektrische Leitfähigkeit (σ) des keramischen Materials in einem unteren Temperaturbereich unterhalb von 700° Celsius erhöht, wobei zumindest der Arbeitsbereich (2) im Wesentlichen formstabil und selbsttragend ist und als langgestreckter Körper ausgebildet ist und wobei die Längserstreckung (L) des Emitterkörpers (1) ein Mehrfaches oder Vielfaches einer Breite und einer Höhe eines quer zur Längserstreckung (L) liegenden oder angeordneten Emitterkörperquerschnitts umfasst und wobei der Arbeitsbereich (2) entlang seiner Längserstreckung (L) eine oder mehrere Krümmungen oder Biegungen aufweist.

2. Infrarotstrahlungs-Emitter nach Anspruch 1, wobei der gesamte Emitterkörper (1) im Wesentlichen formstabil und/oder selbsttragend ist
und/oder
wobei der gesamte Emitterkörper (1) als langgestreckter Körper ausgebildet ist, wobei die Längserstreckung (L) des Emitterkörpers (1) ein Mehrfaches oder Vielfaches bevorzugt ein mehr als zehnfaches oder mehr als fünfzigfaches, einer Breite und einer Höhe eines quer zur Längserstreckung (L) liegenden oder angeordneten Emitterkörperquerschnitts umfasst.

3. Infrarotstrahlungs-Emitter nach einem der vorhergehenden Ansprüche, wobei der Arbeitsbereich (2) so ausgebildet ist, dass in einem Betrieb des Infrarotstrahlungs-Emitters Infrarotstrahlung (R) in wenigstens zwei entgegengesetzte Richtungen, insbesondere zusätzlich in wenigstens eine dritte Richtung, vorzugsweise im Wesentlichen in genau vier Richtungen, abgestrahlt wird
und/oder
wobei der Arbeitsbereich (2) so ausgebildet ist, dass in einem Betrieb des Infrarotstrahlungs-Emitters Infrarotstrahlung (R) radial von dem Arbeitsbereich (2) abstrahlbar ist oder abgestrahlt wird,
und/oder
wobei der Arbeitsbereich (2) ebene Flächen aufweist, von denen in einem Betrieb des Infrarotstrahlungs-Emitters Infrarotstrahlung (R) orthogonal abstrahlbar ist oder abgestrahlt wird.

4. Infrarotstrahlungs-Emitter nach einem der vorhergehenden Ansprüche, wobei der Arbeitsbereich (2) stabförmig oder rohrförmig ausgebildet ist
oder
einen runden, insbesondere kreisförmigen oder nicht kreisförmigen, oder rohrförmigen oder Omega-förmigen oder polygonalen, insbesondere einen im Wesentlichen dreieckigen oder viereckigen, Querschnitt aufweist, insbesondere wobei der Querschnitt eine Breite (t₂) und eine Stärke (t₃) aufweist und/oder
ein U-förmiges oder V-förmiges oder W-förmiges oder C-förmiges Profil aufweist
und/oder wobei der Arbeitsbereich (2) ein Hohlprofil umfasst, welches wenigstens eine Öffnung (5) aufweist, insbesondere wobei die wenigstens eine Öffnung (5) sich im Wesentlichen über die vollständige Längserstreckung (L) des Arbeitsbereichs (2) erstreckt.

5. Infrarotstrahlungs-Emitter nach einem der vorhergehenden Ansprüche, wobei der Arbeitsbereich (2) wenigstens einen oder zwei oder mehrere geradlinig ausgebildete Abschnitte und wenigstens einen oder zwei oder mehrere gekrümmte Abschnitte aufweist.

6. Infrarotstrahlungs-Emitter nach einem der vorhergehenden Ansprüche, wobei der Emitterkörper (1) einen Arbeitsbereich (2) aufweist, der wenigstens einen ersten Abschnitt mit einem ersten elektrischen Widerstandswert und wenigstens einen zweiten Abschnitt, mit einem von dem ersten elektrischen Widerstandswert abweichenden, insbesondere höherem, zweiten elektrischen Widerstandswert oder wobei der Arbeitsbereich (2) wenigstens einen ersten Abschnitt mit einem ersten Querschnitt und wenigstens einen zweiten Abschnitt, mit einem von dem ersten Querschnitt abweichenden, insbesondere kleineren, Querschnitt aufweist, wobei im Betrieb des Infrarotstrahlungs-Emitters der erste Abschnitt eine geringere Temperatur erreicht als der zweite Abschnitt, oder
wobei der Emitterkörper (1) einen Arbeitsbereich (2) sowie wenigstens, vorzugsweise genau, zwei, insbesondere einstückig, mit dem Arbeitsbereich (2) verbundene Kontaktierungsbereiche (4) aufweist, die für den Anschluss von elektrischen Kontakten vorgesehen sind, insbesondere wobei die Kontaktierungsbereiche (4) jeweils größere Querschnitte oder grö-βere Querschnittsflächen aufweisen, als der Querschnitt oder eine Querschnittsfläche des Arbeitsbereichs (2), insbesondere wobei die Kontaktierungsbereiche (4) durch eine Öffnung (5) voneinander beabstandet sind, vorzugsweise wobei der Abstand zwischen den Kontaktierungsbereichen (4) geringer ist als eine Wandbreite (t₂) und eine Wandstärke (t₃) eines Arbeitsbereichs-Querschnitts,
oder
wobei der Emitterkörper (1) einen Arbeitsbereich (2) sowie mittelbar oder unmittelbar, insbesondere einstückig, mit dem Arbeitsbereich (2) verbundene Haltebereiche aufweist, die für die Anordnung und/oder Fixierung des Arbeitsbereichs (2) an Maschinenelementen, insbesondere Vorschubelementen oder Handhabungselementen oder Halteelementen einer Maschine, insbesondere einer Schweißanlage, vorzugsweise einer Kunststoffschweißanlage, vorgesehen sind, insbesondere wobei die Haltebereiche jeweils größere Querschnitte oder größere Querschnittsflächen aufweisen, als der Querschnitt oder eine Querschnittsfläche des Arbeitsbereichs (2) und/oder wobei die Haltebereiche gegenüber dem Arbeitsbereich (2) thermisch isoliert sind,
oder
wobei wenigstens ein, insbesondere alle, Kontaktierungsbereich(e) (4) als Haltebereich(e) ausgebildet ist/sind und/oder wobei der Emitterkörper (1) eine oder mehrere, insbesondere integral mit dem Emitterkörper (1) geformte, Stützstrukturen aufweist, die dazu vorgesehen sind, den Emitterkörper (1) während der Herstellung des Emitterkörpers (1) in dem 3-D-Druckverfahren abzustützen, insbesondere wobei die Stützstrukturen nach der Herstellung des Infrarotstrahlungs-Emitters als Kontaktierungsbereich(e) und/oder als, vorzugsweise elektrisch isolierende, Haltebereich(e) und/oder als, vorzugsweise elektrisch isolierende, Maskierungsbereich(e) ausgebildet sind.

7. Infrarotstrahlungs-Emitter nach einem der vorhergehenden Ansprüche, wobei die erste Materialkomponente (A) ein Halbleitermaterial, insbesondere Siliziumkarbid oder Siliziumnitrid oder eine Mischung aus Siliziumkarbid und Siliziumnitrid, umfasst,
oder
wobei die erste Materialkomponente (A) Sauerstoffionen-Leitfähigkeit aufweist, insbesondere wobei die erste Materialkomponente (A), insbesondere mit Yttriumoxid, dotiertes Zirkoniumoxid umfasst
und/oder
wobei die zweite Materialkomponente (B) Kohlenstoff, vorzugsweise Graphit, umfasst oder
wobei die zweite Materialkomponente (B) Molybdändisilicid oder Titannitrid oder Silizium umfasst.

8. Infrarotstrahlungs-Emitter nach einem der vorhergehenden Ansprüche, wobei der Infrarotstrahlungs-Emitter wenigstens einen ersten Bereich aufweist, in dem das keramische Material die erste Materialkomponente (A) und die zweite Materialkomponente (B) umfasst und wobei der Infrarotstrahlungs-Emitter wenigstens einen zweiten Bereich aufweist, in dem das keramische Material die erste Materialkomponente (A) und die zweite Materialkomponente (B) umfasst, wobei ein Mischungsverhältnis von erster Materialkomponente (A) zu zweiter Materialkomponente (B) in dem ersten Bereich sich von einem Mischungsverhältnis von erster Materialkomponente (A) zu zweiter Materialkomponente (B) in dem zweiten Bereich unterscheidet, vorzugsweise wobei die zweite Materialkomponente (B) in dem zweiten Bereich wesentlich geringer vorhanden ist als in dem ersten Bereich, so dass die elektrische Leitfähigkeit (σ) des zweiten Bereichs gegenüber der elektrischen Leitfähigkeit (σ) des ersten Bereichs wesentlich reduziert ist,
oder
in dem das keramische Material die erste Materialkomponente (A) ohne die zweite Materialkomponente (B) umfasst, vorzugsweise wobei das keramische Material in dem zweiten Bereich ausschließlich die erste Materialkomponente (A) oder die erste Materialkomponente (A) und eine weitere, die elektrische Leitfähigkeit (σ) reduzierende Materialkomponente, umfasst,
insbesondere wobei der wenigstens eine erste Bereich ein Arbeitsbereich (2) ist und wobei der wenigstens eine zweite Bereich eine Stützstruktur und/oder ein Haltebereich und/oder ein Maskierungsbereich des Emitterkörpers (1) ist.

9. Infrarotstrahlungs-Emitter nach einem der vorhergehenden Ansprüche, wobei der Infrarotstrahlungs-Emitter mit einer elektrischen Stromquelle oder einer elektrischen Spannungsquelle verbunden ist und mit einem variablen definierten Betriebsstrom oder einer variablen definierten Betriebsspannung, insbesondere einem definierten Gleichstrom oder einer definierten Gleichspannung, vorzugsweise mit einer Stromstärke in einem Bereich zwischen 20 Ampere und 40 Ampere, betreibbar ist oder betrieben wird, und wobei der Infrarotstrahlungs-Emitter in wenigstens einem oberen Temperaturbereich mit einem niedrigeren Betriebsstrom oder einer niedrigeren Betriebsspannung betreibbar ist oder betrieben wird als in einem unteren Temperaturbereich.

10. Infrarotstrahlungs-Emitter nach einem der Ansprüche 1 bis 8, wobei der Infrarotstrahlungs-Emitter mit einer elektrischen Stromquelle oder einer elektrischen Spannungsquelle verbunden ist und eine aktive Regelung der elektrischen Stromquelle oder einer elektrischen Spannungsquelle umfasst, insbesondere wobei die aktive Regelung als Regelkreis realisiert ist, in dem ein Temperatursensor, insbesondere ein Pyrometer, vorgesehen ist, der die Ist-Temperatur des Emitterkörpers (1) ermittelt, wobei die Ist-Temperatur mit einer voreinstellbaren oder voreingestellten Soll-Temperatur verglichen wird und wobei die Stromquelle oder die Spannungsquelle entsprechend einer aus dem Vergleich resultierenden Abweichung der Ist-Temperatur von der Soll-Temperatur, insbesondere selbsttätig mittels eines Aktors, aktiv geregelt wird.

11. Schweißanlage, insbesondere Kunststoffschweißanlage, mit einem Infrarotstrahlungs-Emitter nach einem der vorhergehenden Ansprüchen.

12. Schweißverfahren, insbesondere Kunststoffschweißverfahren, unter Verwendung eines Infrarotstrahlungs-Emitters mit einem Emitterkörper (1) nach einem der Ansprüche 1 bis 10 oder zur Durchführung in einer Schweißanlage nach Anspruch 11, umfassend die folgenden Schritte:
• Auswahl einer Temperatur (T) in einem Bereich zwischen 1200°C und 1800°C, bevorzugt in einem Bereich zwischen 1400°C und 1800°C, des Emitterkörpers (1) in Abhängigkeit von einem Absorptionskoeffizienten des zu schweißenden Materials für von dem Emitterkörper (1) abstrahlbare Infrarotstrahlung und in Abhängigkeit von einer gewünschten Eindringtiefe der von dem Emitterkörper (1) abstrahlbaren Infrarotstrahlung (R) in das zu schweißende Material;
• Erhitzen des Emitterkörpers (1) auf die ausgewählte Temperatur (T);
• Aufschmelzen des zu schweißenden Materials durch die von dem Emitterkörper (1) bei der ausgewählten Temperatur (T) abgestrahlten Infrarotstrahlung (R);

13. Schweißverfahren nach Anspruch 12, wobei zum Erhitzen des Emitterkörpers (1) ein definierter Betriebsstrom oder eine definierte Betriebsspannung an den Arbeitsbereich (2) angelegt wird, wobei der definierte Betriebsstrom oder die definierte Betriebsspannung bei Erreichen der ausgewählten Temperatur (T) oder einer definierten Temperatur unterhalb der ausgewählten Temperatur (T) so geregelt oder gesteuert wird, dass die ausgewählte Temperatur (T) nicht überschritten wird oder die Temperatur des Arbeitsbereichs (2), insbesondere innerhalb eines definierten Temperaturbandes, konstant bleibt.

14. Schweißverfahren nach Anspruch 13, wobei der Emitterkörper (1) das oder die zu schweißenden Werkstücke berührungslos erwärmt, insbesondere wobei der Emitterkörper (1) in einem Abstand von mindestens 2 mm zur Oberfläche des zu schweißenden Werkstücks angeordnet wird, vorzugsweise wobei der Emitterkörper (1) an die Oberfläche des zu schweißenden Werkstücks heranbewegt wird oder wobei das oder die zu schweißenden Werkstücke an den Emitterkörper (1) heranbewegt werden.

## Claims

1. An infrared radiation emitter comprising an emitter body (1) which comprises a ceramic material and wherein the emitter body (1) has a working region (2) which emits incoherent infrared radiation (R) when an electric current is applied, wherein the ceramic material comprises a first material component (A) which has an electrical conductivity (σ) which increases when the temperature increases, and wherein the ceramic material has a second material component (B) which increases the electrical conductivity (σ) of the ceramic material in a lower temperature range of below 700° Celsius, wherein at least the working region (2) is substantially dimensionally stable and self-supporting and is formed as an elongated body and wherein the longitudinal extension (L) of the emitter body (1) is a multiple or multiples of a width and a height of a cross-section of the emitter body (1) oriented or arranged transversely to the longitudinal extension (L), and wherein the working region (2) comprises one or more curvatures or bends along its longitudinal extension (L).

2. Infrared radiation emitter according to claim 1, wherein the entire emitter body (1) is substantially dimensionally stable
and/or
wherein the entire emitter body (1) is formed as an elongated body, wherein the longitudinal extension (L) of the emitter body (1) is a multiple or multiples, preferably more than tenfold or more than fiftyfold, of a width and a height of a cross section of the emitter body (1) oriented or arranged transverse to the longitudinal extension (L).

3. Infrared radiation emitter according to one of the preceding claims, wherein the working region (2) is formed such that, in an operation of the infrared radiation emitter, infrared radiation (R) is radiated in at least two opposite directions, in particular additionally in at least one third direction, preferably essentially in exactly four directions,
and/or
wherein the working region (2) is formed such that, in an operation of the infrared radiation emitter, infrared radiation (R) can be radiated or is radiated radially from the working region (2),
and/or
wherein the working region (2) has planar surfaces from which infrared radiation (R) can be orthogonally emitted or is radiated during operation of the infrared radiation emitter.

4. Infrared radiation emitter according to one of the preceding claims, wherein the working region (2) is rod-shaped or tubular,
or
has a round, in particular circular or non-circular, or tubular or omega-shaped or polygonal, in particular an essentially triangular or quadrangular, cross-section, in particular wherein the cross-section has a width (t2) and a thickness (t3)
and/or
has a U-shaped or V-shaped or W-shaped or C-shaped profile
and/or
wherein the working region (2) comprises a hollow profile which has at least one opening (5), in particular wherein the at least one opening (5) extends substantially over the complete longitudinal extension (L) of the working region (2).

5. Infrared radiation emitter according to one of the preceding claims, wherein the working region (2) comprises at least one or two or more rectilinear sections and at least one or two or more curved sections.

6. Infrared radiation emitter according to one of the preceding claims, wherein the emitter body (1) comprises a working region (2) that comprises at least a first portion having a first electrical resistance value and at least one second section with a second electrical resistance value which differs from the first electrical resistance value, in particular a higher electrical resistance value, or wherein the working region (2) has at least one first section with a first cross-section and at least one second section with a cross-section which differs from the first cross-section, in particular a smaller cross-section, wherein, in the operation of the infrared radiation emitter, the first section reaches a lower temperature than the second section,
or
wherein the emitter body (1) has a working region (2) and at least, preferably exactly, two contacting regions (4) which are connected, in particular integrally, to the working region (2) and which are provided for the connection of electrical contacts, in particular wherein the contacting regions (4) each have larger cross-sections or larger cross-sectional areas than the cross-section or a cross-sectional area of the working region (2), in particular wherein the contacting regions (4) are spaced apart from one another by an opening (5), preferably wherein the distance between the contacting regions (4) is less than a wall width (t2) and a wall thickness (t3) of a working region cross-section,
or
wherein the emitter body (1) has a working region (2) and holding regions connected directly or indirectly, in particular in one piece, to the working region (2) and which are provided for the arrangement and/or fixing of the working region (2) on machine elements, in particular feed elements or handling elements or holding elements of a machine, in particular a welding system, preferably a plastics welding system, in particular wherein the holding regions each have larger cross-sections or larger cross-sectional areas than the cross-section or a cross-sectional area of the working region (2)
and/or
wherein the holding regions are thermally insulated from the working region (2),
or
wherein at least one, in particular all, contacting area(s) is/are designed as holding area(s)
and/or
wherein the emitter body (1) has one or more support structures, in particular formed integrally with the emitter body (1), which are provided to support the emitter body (1) during the production of the emitter body (1) in the 3D printing process, in particular wherein the support structures are formed after the production of the infrared radiation emitter as contacting region(s) and/or as, preferably electrically insulating, holding region(s) and/or as, preferably electrically insulating, masking region(s).

7. Infrared radiation emitter according to one of the preceding claims, wherein the first material component (A) comprises a semiconductor material, in particular silicon carbide or silicon nitride or a mixture of silicon carbide and silicon nitride,
or
wherein the first material component (A) comprises oxygen ion conductivity, in particular wherein the first material component (A) comprises zirconium oxide, in particular doped with yttrium oxide,
and/or
wherein the second material component (B) comprises carbon, preferably graphite, or wherein the second material component (B) comprises molybdenum disilicide or titanium nitride or silicon.

8. Infrared radiation emitter according to one of the preceding claims, wherein the infrared radiation emitter comprises at least a first region in which the ceramic material comprises the first material component (A) and the second material component (B), and wherein the infrared radiation emitter has at least a second region in which the ceramic material comprises the first material component (A) and the second material component (B), wherein a mixing ratio of the first material component (A) to the second material component (B) in the first material component (A) to second material component (B) in the first region differs from a mixing ratio of first material component (A) to second material component (B) in the second region, preferably wherein the second material component (B) is present in the second region to a substantially lesser extent than in the first region, so that the electrical conductivity (σ) of the second region is substantially reduced compared to the electrical conductivity (σ) of the first region,
or
in which the ceramic material comprises the first material component (A) without the second material component (B), preferably wherein the ceramic material in the second region exclusively comprises the first material component (A) or comprises the first material component (A) and a further material component that reduces the electrical conductivity (σ),
in particular wherein the at least one first region is a working region (2) and wherein the at least one second region is a support structure and/or a holding region and/or a masking region of the emitter body (1).

9. Infrared radiation emitter according to one of the preceding claims, wherein the infrared radiation emitter is connected to an electrical current source or an electrical voltage source and can be or is operated with a variably defined operating current or a variably defined operating voltage, in particular a defined direct current or a defined defined DC voltage, preferably with a current strength in a range between 20 amperes and 40 amperes, and wherein the infrared radiation emitter can be operated or is operated in at least one upper temperature range with a lower operating current or a lower operating voltage than in a lower temperature range.

10. Infrared radiation emitter according to any one of claims 1 to 8, wherein the infrared radiation emitter is connected to an electric current source or an electric voltage source and comprises an active control of the electric current source or the electric voltage source, in particular wherein the active control is provided as a control loop in which a temperature sensor, in particular a pyrometer, is provided which determines the actual temperature of the emitter body (1), wherein the actual temperature is compared with a presettable or preset target temperature and wherein the current source or the voltage source is actively controlled according to a deviation of the actual temperature from the target temperature, in particular automatically by means of an actuator.

11. Welding system, in particular plastic welding system, with an infrared radiation emitter according to one of the preceding claims.

12. Welding process, in particular plastic welding process, using an infrared radiation emitter with an emitter body emitter body (1) according to one of claims 1 to 10 or for implementation in a welding system according to claim 11, comprising the following steps:
- selecting a temperature (T) of the emitter body (1) in a range between 1200°C and 1800°C, preferably in a range between 1400°C and 1800°C, depending on an absorption coefficient of the material to be welded for the infrared radiation emitted by the emitter body (1) and depending on a desired penetration depth of the infrared radiation (R) emitted by the emitter body (1) into the material to be welded;
- heating the emitter body (1) to the selected temperature (T); and
- melting of the material to be welded by the infrared radiation emitted by the emitter body (1) at the selected at the selected temperature (T);

13. Welding method according to claim 12, wherein for heating the emitter body (1) a defined operating current or a defined operating voltage is applied to the working region (2), wherein, when the selected temperature (T) or a defined temperature below the selected temperature (T) is reached, the defined operating current or the defined operating voltage is regulated or controlled in such a way that the selected temperature (T) is not exceeded or or the temperature of the working region (2), in particular within a defined temperature band, remains constant.

14. Welding method according to claim 13, wherein the emitter body (1) heats the workpiece or workpieces to be welded contactless, in particular wherein the emitter body (1) is arranged at a distance of at least 2 mm from the surface of the workpiece to be welded, preferably wherein the emitter body (1) is moved towards the surface of the workpiece to be welded or wherein the workpiece or the workpieces to be welded are moved towards the emitter body (1).

## Revendications

1. Un émetteur de rayonnement infrarouge comprenant un corps émetteur (1) qui comprend un matériau céramique et dans lequel le corps émetteur (1) a une zone de travail (2) qui émet un rayonnement infrarouge incohérent (R) lorsqu'un courant électrique est appliqué, dans lequel le matériau céramique comprend un premier composant matériel (A) qui a une conductivité électrique (σ) qui augmente lorsque la température augmente, et dans lequel le matériau céramique a un deuxième composant matériel (B) qui augmente la conductivité électrique (σ) du matériau céramique dans une plage de température inférieure de moins de 700° Celsius, dans lequel au moins la zone de travail (2) est sensiblement dimensionnellement stable et autoportante et est formée comme un corps allongé et dans lequel l'extension longitudinale (L) du corps émetteur (1) est un multiple ou des multiples d'une largeur et d'une hauteur d'une section transversale du corps émetteur (1) orientée ou disposée transversalement à l'extension longitudinale (L), et dans lequel la zone de travail (2) comprend une ou plusieurs courbures ou courbures le long de son extension longitudinale (L).

2. Émetteur de rayonnement infrarouge selon la revendication 1, dans lequel l'ensemble du corps de l'émetteur (1) est sensiblement stable sur le plan dimensionnel
et/ou
dans lequel l'ensemble du corps émetteur (1) est formé d'un corps allongé, dans lequel l'extension longitudinale (L) du corps émetteur (1) est un multiple ou des multiples, de préférence plus de dix fois ou plus de cinquante fois, d'une largeur et d'une hauteur d'une section transversale du corps émetteur (1) orientée ou disposée transversalement à l'extension longitudinale (L).

3. Émetteur de rayonnement infrarouge selon l'une des revendications précédentes, dans lequel la zone de travail (2) est formée de telle sorte que, lors du fonctionnement de l'émetteur de rayonnement infrarouge, le rayonnement infrarouge (R) est émis dans au moins deux directions opposées, en particulier en plus dans au moins une troisième direction, de préférence essentiellement dans quatre directions exactement,
et/ou
dans laquelle la zone de travail (2) est formée de telle sorte que, lors du fonctionnement de l'émetteur de rayonnement infrarouge, le rayonnement infrarouge (R) peut être rayonné ou est rayonné radialement à partir de la zone de travail (2),
et/ou
dans laquelle la zone de travail (2) présente des surfaces planes à partir desquelles le rayonnement infrarouge (R) peut être émis de manière orthogonale ou est rayonné pendant le fonctionnement de l'émetteur de rayonnement infrarouge.

4. Émetteur de rayonnement infrarouge selon l'une des revendications précédentes, dans lequel la zone de travail (2) a la forme d'une tige ou d'un tube,
ou
a une section transversale ronde, en particulier circulaire ou non circulaire, ou tubulaire ou oméga ou polygonale, en particulier essentiellement triangulaire ou quadrangulaire, en particulier dans laquelle la section transversale a une largeur (t2) et une épaisseur (t3)
et/ou
a un profil en U, en V, en W ou en C
et/ou
dans laquelle la zone de travail (2) comprend un profil creux qui a au moins une ouverture (5), en particulier dans laquelle l'au moins une ouverture (5) s'étend sensiblement sur toute l'extension longitudinale (L) de la zone de travail (2).

5. Émetteur de rayonnement infrarouge selon l'une des revendications précédentes, dans lequel la zone de travail (2) comprend au moins une ou deux sections rectilignes ou plus et au moins une ou deux sections courbes ou plus.

6. Emetteur de rayonnement infrarouge selon l'une des revendications précédentes, dans lequel le corps émetteur (1) comprend une zone de travail (2) qui comprend au moins une première partie ayant une première valeur de résistance électrique et au moins une deuxième section ayant une deuxième valeur de résistance électrique qui diffère de la première valeur de résistance électrique, en particulier une valeur de résistance électrique plus élevée, ou dans lequel la zone de travail (2) présente au moins une première section avec une première section transversale et au moins une deuxième section avec une section transversale différente de la première section transversale, en particulier une section transversale plus petite, dans laquelle, lors du fonctionnement de l'émetteur de rayonnement infrarouge, la première section atteint une température inférieure à celle de la deuxième section,
ou
dans lequel le corps émetteur (1) possède une zone de travail (2) et au moins, de préférence exactement, deux zones de contact (4) qui sont reliées, en particulier intégralement, à la zone de travail (2) et qui sont prévues pour la connexion de contacts électriques, en particulier dans lequel les zones de contact (4) ont chacune des sections transversales plus grandes ou des surfaces transversales plus grandes que la section transversale ou une surface transversale de la zone de travail (2), en particulier dans lequel les régions de contact (4) sont séparées les unes des autres par une ouverture (5), de préférence dans lequel la distance entre les régions de contact (4) est inférieure à une largeur de paroi (t2) et à une épaisseur de paroi (t3) d'une section transversale de la région de travail,
ou
dans lequel le corps émetteur (1) possède une zone de travail (2) et des zones de maintien reliées directement ou indirectement, en particulier en une seule pièce, à la zone de travail (2) et qui sont prévues pour la disposition et/ou la fixation de la zone de travail (2) sur des éléments de machine, en particulier des éléments d'alimentation ou des éléments de manipulation ou des éléments de maintien d'une machine, en particulier un système de soudage, de préférence un système de soudage de matières plastiques, en particulier dans lequel les zones de maintien ont chacune des sections transversales plus grandes ou des surfaces de section transversale plus grandes que la section transversale ou une surface de section transversale de la zone de travail (2)
et/ou
dans lequel les zones de maintien sont thermiquement isolées de la zone de travail (2),
ou
dans laquelle au moins une, en particulier toutes les zones de contact sont conçues comme des zones de maintien
et/ou
dans lequel le corps émetteur (1) comporte une ou plusieurs structures de support, notamment formées d'un seul tenant avec le corps émetteur (1), qui servent à soutenir le corps émetteur (1) pendant la production du corps émetteur (1) dans le processus d'impression 3D, notamment dans lequel les structures de support sont formées après la production de l'émetteur de rayonnement infrarouge en tant que région(s) de contact et/ou en tant que région(s) de maintien, de préférence isolante(s) électriquement, et/ou en tant que région(s) de masquage, de préférence isolante(s) électriquement.

7. Émetteur de rayonnement infrarouge selon l'une des revendications précédentes, dans lequel le premier composant matériel (A) comprend un matériau semi-conducteur, en particulier du carbure de silicium ou du nitrure de silicium ou un mélange de carbure de silicium et de nitrure de silicium,
ou
dans lequel le premier composant matériel (A) comprend une conductivité ionique de l'oxygène, en particulier dans lequel le premier composant matériel (A) comprend de l'oxyde de zirconium, en particulier dopé avec de l'oxyde d'yttrium,
et/ou
dans lequel le second composant matériel (B) comprend du carbone, de préférence du graphite, ou dans lequel le second composant matériel (B) comprend du disiliciure de molybdène, du nitrure de titane ou du silicium.

8. Émetteur de rayonnement infrarouge selon l'une des revendications précédentes, dans lequel l'émetteur de rayonnement infrarouge comprend au moins une première région dans laquelle le matériau céramique comprend le premier composant matériel (A) et le deuxième composant matériel (B), et dans lequel l'émetteur de rayonnement infrarouge a au moins une deuxième région dans laquelle le matériau céramique comprend le premier composant matériel (A) et le deuxième composant matériel (B), dans lequel le rapport de mélange entre le premier composant matériel (A) et le second composant matériel (B) dans la première région diffère du rapport de mélange entre le premier composant matériel (A) et le second composant matériel (B) dans la seconde région, de préférence dans lequel le second composant matériel (B) est présent dans la seconde région dans une mesure sensiblement moindre que dans la première région, de sorte que la conductivité électrique (σ) de la seconde région est sensiblement réduite par rapport à la conductivité électrique (σ) de la première région,
ou
dans lequel le matériau céramique comprend le premier composant matériel (A) sans le second composant matériel (B), de préférence dans lequel le matériau céramique de la seconde région comprend exclusivement le premier composant matériel (A) ou comprend le premier composant matériel (A) et un autre composant matériel qui réduit la conductivité électrique (σ),
en particulier, dans lequel la première région au moins est une région de travail (2) et dans lequel la deuxième région au moins est une structure de support et/ou une région de maintien et/ou une région de masquage du corps d'émetteur (1).

9. Émetteur de rayonnement infrarouge selon l'une des revendications précédentes, dans lequel l'émetteur de rayonnement infrarouge est connecté à une source de courant électrique ou à une source de tension électrique et peut fonctionner ou fonctionne avec un courant de fonctionnement défini variable ou une tension de fonctionnement définie variable, en particulier un courant continu défini ou une tension continue définie définie, de préférence avec une intensité de courant comprise entre 20 ampères et 40 ampères, et dans lequel l'émetteur de rayonnement infrarouge peut fonctionner ou fonctionne dans au moins une plage de température supérieure avec un courant de fonctionnement plus faible ou une tension de fonctionnement plus faible que dans une plage de température inférieure.

10. Émetteur de rayonnement infrarouge selon l'une quelconque des revendications 1 à 8, dans lequel l'émetteur de rayonnement infrarouge est connecté à une source de courant électrique ou à une source de tension électrique et comprend un contrôle actif de la source de courant électrique ou de la source de tension électrique, en particulier dans lequel le contrôle actif est fourni sous la forme d'une boucle de contrôle dans laquelle un capteur de température, en particulier un pyromètre, qui détermine la température réelle du corps émetteur (1), dans lequel la température réelle est comparée à une température cible préréglable ou prédéfinie et dans lequel la source de courant ou la source de tension est commandée activement en fonction de l'écart entre la température réelle et la température cible, en particulier automatiquement au moyen d'un actionneur.

11. Système de soudage, notamment de plastique, avec un émetteur de rayonnement infrarouge selon l'une des revendications précédentes.

12. Procédé de soudage, notamment de soudage de matières plastiques, utilisant un émetteur de rayonnement infrarouge avec un corps émetteur (1) selon l'une des revendications 1 à 10 ou pour mise en oeuvre dans un système de soudage selon la revendication 11, comprenant les étapes suivantes :
- sélection d'une température (T) du corps émetteur (1) dans une plage comprise entre 1200°C et 1800°C, de préférence dans une plage comprise entre 1400°C et 1800°C, en fonction d'un coefficient d'absorption du matériau à souder pour le rayonnement infrarouge émis par le corps émetteur (1) et en fonction d'une profondeur de pénétration souhaitée du rayonnement infrarouge (R) émis par le corps émetteur (1) dans le matériau à souder;
- le chauffage du corps émetteur (1) à la température sélectionnée (T); et
- la fusion du matériau à souder par le rayonnement infrarouge émis par le corps émetteur (1) à la température sélectionnée (T);

13. Procédé de soudage selon la revendication 12, dans lequel, pour chauffer le corps émetteur (1), un courant de fonctionnement défini ou une tension de fonctionnement définie est appliqué à la zone de travail (2), dans lequel, lorsque la température sélectionnée (T) ou une température définie inférieure à la température sélectionnée (T) est atteinte, le courant de fonctionnement défini ou la tension de fonctionnement définie est régulé ou contrôlé de manière à ce que la température sélectionnée (T) ne soit pas dépassée ou que la température de la zone de travail (2), en particulier à l'intérieur d'une bande de température définie, reste constante.

14. Procédé de soudage selon la revendication 13, dans lequel le corps émetteur (1) chauffe la ou les pièces à souder sans contact, en particulier dans lequel le corps émetteur (1) est disposé à une distance d'au moins 2 mm de la surface de la pièce à souder, de préférence dans lequel le corps émetteur (1) est déplacé vers la surface de la pièce à souder ou dans lequel la ou les pièces à souder sont déplacées vers le corps émetteur (1).
